(19) Europäisches Patentamt
European Patent Office
Office européen des brevets

(11) **EP 4 423 039 B1**

(12) **EUROPEAN PATENT SPECIFICATION**


(45) Date of publication and mention of the grant of the patent:
**17.09.2025 Bulletin 2025/38**

(21) Application number: **22809371.2**

(22) Date of filing: **24.10.2022**

(51) International Patent Classification (IPC):
***C05C 9/00*** *(2006.01)* ***C05G 3/90*** *(2020.01)*

(52) Cooperative Patent Classification (CPC):
**C05C 9/005; C05G 3/90;** Y02P 60/21

(86) International application number:
**PCT/EP2022/079514**

(87) International publication number:
**WO 2023/072797 (04.05.2023 Gazette 2023/18)**


(54) **POLYMER FREE AND LOW ODOR UREASE INHIBITOR FORMULATION WITH IMPROVED STORAGE STABILITY ON UREA**

GERUCHSARME UREASE-INHIBITORFORMULIERUNG MIT VERBESSERTER LAGERSTABILITÄT AUF HARNSTOFF

FORMULATION D'INHIBITEUR D'URÉASE À FAIBLE ODEUR PRÉSENTANT UNE MEILLEURE STABILITÉ DE STOCKAGE SUR L'URÉE


(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **26.10.2021 EP 21204749**

(43) Date of publication of application:
**04.09.2024 Bulletin 2024/36**



(73) Proprietor: **BASF SE**
**67056 Ludwigshafen am Rhein (DE)**

(72) Inventors:
- **STAAL, Maarten**
  **67117 Limburgerhof (DE)**
- **MALANG, Ulrike**
  **67117 Limburgerhof (DE)**
- **SCHMID, Markus**
  **67117 Limburgerhof (DE)**
- **PASDA, Gregor**
  **67117 Limburgerhof (DE)**
- **THIEL, Uwe**
  **67117 Limburgerhof (DE)**
- **KNAUER, Manuel**
  **67117 Limburgerhof (DE)**
- **BLANZ, Birgit**
  **67117 Limburgerhof (DE)**

(74) Representative: **BASF IP Association**
**BASF SE**
**GBI - Z078**
**67056 Ludwigshafen (DE)**



(56) References cited:
**EP-A1- 3 210 959**
**EP-A1- 3 763 691**
**US-A1- 2021 155 560**



EP 4 423 039 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to the use of a solvent (C) selected from the group consisting of glycol ether, glycerin ether, and mixtures thereof for stabilizing at least one (thio)phosphoric acid triamide in a fertilizer composition (1) comprising a urea-containing fertilizer (F1) and a urease inhibitor formulation (UI) comprising a mixture (A) comprising the at least one (thio)phosphoric acid triamide and the solvent (C), wherein the inhibitor formulation (UI) is polymer free as defined herein below. Further, the present invention relates to a specific urease inhibitor formulation (UI) and to a specific fertilizer composition (1) each comprising at least one (thio)phosphoric acid triamide and specific solvents as defined herein below.

Worldwide, the predominant and further-increasing amount of the nitrogen used for fertilizing is employed in the form of urea or urea-containing fertilizers. Urea itself, however, is a form of nitrogen which is absorbed very little if at all, being hydrolyzed relatively rapidly by the enzyme urease, which is present ubiquitously in the soil, to form ammonia and carbon dioxide. In this process, in certain circumstances, gaseous ammonia is emitted to the atmosphere, and is then no longer available in the soil for the plants, thereby lowering the efficiency of fertilization.

Ammonia volatilization can cause up to 80% loss of total nitrogen input from surface applied urea, depending on weather and soil conditions. Nitrogen losses result in yield reduction at farmer level and pose an environmental challenge. Ammonia volatilization can be reduced by using urease inhibitors. Next to emission reduction, urease inhibitors also improve the nitrogen-use-efficiency, increase yield performance and allow for a higher degree of freedom in fertilizer application strategy for the farmer. It is known that the degree of utilization of the nitrogen when using urea-containing fertilizers can be improved by spreading urea-containing fertilizers together with substances which are able to inhibit or decrease the enzymatic cleavage of urea (for a general review, see Kiss, S. Simihäian, M. (2002) Improving Efficiency of Urea Fertilizers by Inhibition of Soil Urease Activity, ISBN 1-4020-0493-1, Kluwer Academic Publishers, Dordrecht, The Netherlands). Among the most potent known urease inhibitors are N-alkylthiophosphoric acid triamides and N-alkylphosphoric acid triamides, which are described in EP 0119487, for example.

It is advisable to apply the urease inhibitors together with the urea onto or into the soil, since this ensures that the inhibitor comes into contact, together with the fertilizer, with the soil. The urease inhibitor may be incorporated in the urea by, for example, dissolving it into the melt prior to urea granulation or prilling. A process of this kind is described in U.S. Pat. No. 5,352,265, for example. A further option is to apply the urease inhibitor to the urea granules or prills, in the form of a solution, for example.

The shelf life of the urease inhibitor is limited. The higher the temperature, the shorter the storage life. If, for example, urea is stored under tropical conditions, a major part of the urease inhibitor has undergone decomposition, generally, after about four weeks of storage. If the urease inhibitor is introduced into the urea melt, the decomposition is less. For the commercialization of the urea stabilized with the urease inhibitor, however, it is often vital to apply the urease inhibitor to urea and to store the treated fertilizer until the time of its spreading to the soil.

N-(n-butyl)thiophosphoric acid triamide (NBPT) exemplarily is known to degrade when applied to urea (Soares et al, 17th International Nitrogen Workshop, 2012; Cantarella H, Soares JR, SousaRM,Otto R, SequeiraCH. Stability of urease inhibitor added to urea. Melbourne, Australia: 2016 International nitrogen initiative conference: solutions to improve nitrogen use efficiency for the world, 2016; Watson CJ, Akhonzada NA, Hamilton JTG, Matthews DI. Rate and mode of application of the urease inhibitor N-(n-butyl) thiophosphoric triamide on ammonia volatilization from surface-applied urea. Soil Use Management, 2008, 24:246-53). Attempts have been made to increase the shelf life of NBPT on urea. The stability of N-(n-butyl)thiophosphoric acid triamide (NBPT) and N-(n-propyl)thiophosphoric acid triamide (NPPT) on urea can e.g. be improved using stabilizers, as described in WO 2015/001457. There is however still the need of a stable urea-based granular fertilizer composition, which can be applied directly onto the field.

EP 3 763 691 A1 describes compositions with improved urease-inhibiting effect comprising (thio)phosphoric acid triamide and specific amines and/or colorants. EP3 210 959 A1 describes liquid urease inhibitor formulations that comprise a glycol type solvent and a (thio)phosphoric acid triamide, methods of manufacturing it and solid particulates comprising it.

Since fertilizers are not only applied under tropical conditions, the urease inhibitor-containing formulation should further provide a sufficient cold stability, so that the urease inhibitor does not crystallize or freeze at lower temperature. Therefore, there is still a need for urease-inhibitor-containing formulations that are well balanced in cold stability and at higher temperatures.

Against this background it has been an object of the present invention to provide a stable, urea-containing fertilizer composition. In particular, it has been an object of the present invention to provide a stable urea-containing fertilizer composition, wherein not only the urea-containing fertilizer but also the urease inhibitor are stabilized, preferably even under tropical conditions for a sufficient time period. In this connection, a sufficient time period may be seen as e.g. one to three weeks, preferably about two weeks, when applied directly onto the field, since it is assumed that within this time period the nitrogen of urea-containing fertilizer is sufficiently absorbed into the soil due to at least the morning dew. With regards to storage, a sufficient time period may be seen as e.g. 6 to 24 months, preferably about 12 months. Further, it had

been an object to provide a urease inhibitor-containing formulation having a sufficient cold stability.

In addition, it has been an object of this invention is to provide a urea-containing fertilizer composition that is free of micro plastics/polymers.

Further, it has been an object of the present invention to stabilize a urea-containing fertilizer composition comprising at least one (thio)phosphoric acid triamide.

Further, it has been an object of the present invention to provide a urease inhibitor formulation, which can easily be applied.

Finally, it has been an object of the present invention to provide a urease inhibitor-containing formulation, which is user-friendly (e.g. wherein the urease inhibitor-containing formulation has a reduced odor).

It has surprisingly been found by the inventors of the present invention, that at least one of the above objects can be achieved by the use of a solvent (C) as claimed in the appended claims. It has further been found by the inventors of the present invention, that the urease inhibitor formulation (UI) as claimed in the appended claims provides a sufficient cold and storage stability at elevated temperature.

In a first aspect, the present invention therefore relates to the use of a solvent (C) selected from the group consisting of glycol ether, glycerin ether, and mixtures thereof for stabilizing at least one (thio)phosphoric acid triamide in a fertilizer composition (1) comprising a urea-containing fertilizer (F1) and a urease inhibitor formulation (UI) comprising a mixture (A) comprising the at least one (thio)phosphoric acid triamide and the solvent (C), wherein the inhibitor formulation (UI) is polymer free, and wherein the urease inhibitor formulation (UI) further comprises

(D) at least one amine selected from the group consisting of

(D2) an amine containing not more than one amino group and at least three alkoxy- or hydroxy-substituted $C_2$ to $C_{12}$ alkyl groups $R^{21}$, wherein at least one of the groups $R^{21}$ is different to the other groups $R^{21}$,

(D3) an amine containing not more than one amino group and at least two alkoxy- or hydroxy-substituted $C_2$ to $C_{12}$ alkyl groups $R^{22}$, wherein at least one of the groups $R^{22}$ bears the alkoxy or hydroxy substituent at a secondary or tertiary carbon atom and wherein at least one of the groups $R^{22}$ is different to the other group(s) $R^{22}$,

(D4) an amine containing at least one saturated or unsaturated $C_8$ to $C_{40}$ alkyl group $R^{23}$,

(D5) a saturated or unsaturated heterocyclic amine which contains at least one oxygen atom as ring atom and which does not contain a further alkoxy group, and

(D6) an amine selected from the group consisting of methyl-diethanolamine, methyl-diisopropanolamin, tetrahydroxy-propylethylenediamine, trimethylaminoethylethanolamine, N,N,N',N'-tetramethyl-1,6-hexanediamine, N, N' ,N "-tris(dimethylaminopropyl)hexahydrotriazine, and 2,2'-dimorpholinyldiethyl ether.

In the following, preferred embodiments of the components of the use are described in further detail. It is to be understood that each preferred embodiment is relevant on its own as well as in combination with other preferred embodiments.

In a preferred embodiment A1 of the first aspect, the urease inhibitor formulation (UI) further comprises (B) a polar aprotic solvent, preferably a carboxylic acid amide, more preferably N,N-dimethyl lactamide preferably wherein the polar aprotic solvent improves the cold stability of the urease inhibitor formulation (UI).

In a preferred embodiment A2 of the first aspect, the urease inhibitor formulation (UI) is coated onto the urea-containing fertilizer (F1).

In a preferred embodiment A3 of the first aspect, the solvent (C) is selected from the group consisting of diethylene glycol, dipropylene glycol, triethylene glycol, di-ethyleneglycol monobutylether, triethyleneglycol-n-butylether, and mixtures thereof, in particular diethylene glycol and/or the solvent (C) has a flashpoint (determined according to ISO 2719:2016) of more than 130 ° C, preferably more than 135° C, and in particular more than 140° C.

In a preferred embodiment A4 of the first aspect, the mixture (A) comprises at least one (thio)phosphoric acid triamide according to general formula (I)

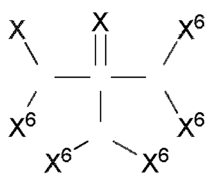
(I)

wherein

| | |
|---|---|
| $X^1$ | is O or S; |
| $R^1$ | is $C_1$-$C_{20}$-alkyl, $C_3$-$C_{20}$-cycloalkyl, $C_6$-$C_{20}$-aryl, $C_6$-$C_{20}$-aryl-$C_1$-$C_4$-alkyl, or $C_1$-$C_6$-(di)alkylaminocarbonyl; |

$R^2$ is H, $C_1$-$C_{20}$-alkyl, $C_3$-$C_{20}$-cycloalkyl, $C_6$-$C_{20}$-aryl, $C_6$-$C_{20}$-aryl-$C_1$-$C_4$-alkyl, or $C_1$-$C_6$-(di)alkylaminocarbonyl; or

$R^1$ and $R^2$ together with the nitrogen atom linking them define a 5- or 6-membered saturated or unsaturated heterocyclic radical, which optionally comprises 1 or 2 further heteroatoms selected from the group consisting of N, O, and S; and

$R^3$, $R^4$, $R^5$, and $R^6$ are independently of each other selected from the group consisting of H and $C_1$-$C_4$-alkyl; preferably

wherein the mixture (A) comprises N-(n-butyl)thiophosphoric acid triamide (NBPT) and/or N-(n-propyl)thiophosphoric acid triamide (NPPT), in particular wherein the mixture (A) comprises N-(n-butyl)thiophosphoric acid triamide (NBPT) and N-(n-propyl)thiophosphoric acid triamide (NPPT) and/or
wherein the at least one (thio)phosphoric acid triamide is comprised in the urease inhibitor formulation (UI) in an amount of 5 to less than 45 wt.-%, preferably of 10 to 42 wt.-%, and in particular of 15 to 40 wt.-%, based on the total amount of the urease inhibitor formulation (UI).

In a preferred embodiment A5 of the first aspect,
the at least one amine (D) is selected from the group consisting of

(D2) an amine containing not more than one amino group and at least three hydroxy-substituted $C_2$ to $C_8$, preferably $C_2$ to $C_5$, more preferably $C_2$ to $C_3$ alkyl groups $R^{21}$, wherein at least one of the groups $R^{21}$ is different to the other groups $R^{21}$,
(D3) an amine containing not more than one amino group and at least two alkoxy- or hydroxy-substituted $C_2$ to $C_8$, preferably $C_2$ to $C_5$, more preferably $C_2$ to $C_3$ alkyl groups $R^{22}$, wherein at least one of the groups $R^{22}$ bears the alkoxy or hydroxy substituent at a secondary or tertiary carbon atom and wherein at least one of the groups $R^{22}$ is different to the other group(s) $R^{22}$,
(D6) an amine selected from the group consisting of methyl-diethanolamine, methyl-diisopropanolamin, and N, N',N"-tris(dimethylaminopropyl)hexahydrotriazine,

in particular wherein the at least one amine is methyl-diethanolamine (MDEOA), methyl-diisopropanolamin (MDIPOA), methyl-ethanol-isopropanolamin (MEIPOA), N, N',N"-tris(dimethylaminopropyl)hexahydrotriazine (NNN), 1,1 '-((2-Hydroxyethyl)imino)dipropan-2-ol (EDIPOA) or bis(hydroxyethyl)-isopropanolamine (DEIPA).
In a preferred embodiment A6 of the first aspect, at least 85 wt.-%, preferably at least 90 wt.-%, more preferably at least 95 wt.-%, and in particular at least 97 wt.-%, of the at least one (thio)phosphoric acid triamide comprised in the urease inhibitor formulation (UI) are stable over a period of 14 days storage in closed bottles at 54 ° C.
In a preferred embodiment A7 of the first aspect, the pH of the urease inhibitor formulation (UI) is in the range of 8 to 10 and/or
the pH change delta of the urease inhibitor formulation (UI) after two weeks storage at 54 ° C is less than $\pm 0.8$, preferably less than $\pm 0.5$, and in particular less than $\pm 0.3$ and/or the urease inhibitor formulation (UI) has a viscosity at a shear rate of $100 s^{-1}$ determined according to CIPAC method 192 (rotational rheometer) of at most 100 mPas, preferably at most 80 mPas at 20° C and at most 170 mPas, preferably at most 150 mPas at 10° C.
In a second aspect, the present invention relates to a urease inhibitor formulation (UI) having a viscosity at a shear rate of $100 s^{-1}$ determined according to CIPAC method 192 (rotational rheometer) of at most 100 mPas, preferably at most 80 mPas, at 20° C and at most 170 mPas, preferably at most 150 mPas, at 10° C comprising

(A) 10 to 45 wt.-%, preferably 15 to 30 wt.-%, of a mixture (A) comprises N-(n-butyl)thiophosphoric acid triamide (NBPT) and N-(n-propyl)thiophosphoric acid triamide (NPPT),
(B) 0 to 50 wt.-%, preferably 8 to 22 wt.-%, of N,N-dimethyl lactamide,
(C) 20 to 85 wt.-%, preferably 40 to 70 wt.-%, of a solvent selected from the group consisting of glycol ether, glycerin ether, and mixtures thereof, and
(D) 3 to 25 wt.-%, preferably 4 to 15 wt.-%, of at least one amine selected from the group consisting of

(D2) an amine containing not more than one amino group and at least three alkoxy- or hydroxy-substituted $C_2$ to $C_{12}$ alkyl groups $R^{21}$, wherein at least one of the groups $R^{21}$ is different to the other groups $R^{21}$,
(D3) an amine containing not more than one amino group and at least two alkoxy- or hydroxy-substituted $C_2$ to $C_{12}$ alkyl groups $R^{22}$, wherein at least one of the groups $R^{22}$ bears the alkoxy or hydroxy substituent at a secondary or tertiary carbon atom and wherein at least one of the groups $R^{22}$ is different to the other group(s) $R^{22}$,
(D4) an amine containing at least one saturated or unsaturated $C_8$ to $C_{40}$ alkyl group $R^{23}$, (D5) a saturated or unsaturated heterocyclic amine which contains at least one oxygen atom as ring atom and which does not contain

a further alkoxy group, and (D6) an amine selected from the group consisting of methyl-diethanolamine, methyl-diisopropanolamin, tetrahydroxy-propylethylenediamine, trimethylaminoethylethanolamine, N,N,N',N'-tetramethyl-1,6-hexanediamine, N, N' N"-tris(dimethylaminopropyl)hexahydrotriazine, and 2,2'-dimorpholinyldiethyl ether,

each based on the total amount of the urease inhibitor formulation (UI), wherein the inhibitor formulation (UI) is polymer free.

In a preferred embodiment B1 of the second aspect, the solvent is selected from the group consisting of diethylene glycol, dipropylene glycol, triethylene glycol, di-ethyleneglycol monobutylether, triethyleneglycol-n-butylether, and mixtures thereof, in particular diethylene glycol and/or
the solvent has a flashpoint (determined according to ISO 2719:2016) of more than 130° C, preferably more than 135° C, and in particular more than 140° C.

In a third aspect, the present invention relates to a fertilizer composition (1) comprising a urea-containing fertilizer (F1) and mixture (M) comprising

(A) a mixture (A) comprising at least one (thio)phosphoric acid triamide;
(B) N,N-dimethyl lactamide; and
(C) a solvent selected from the group consisting of glycol ether, glycerin ether, and mixtures thereof, wherein mixture (M) is polymer free.

In a preferred embodiment C1 of the third aspect, the mixture (A) comprises at least one (thio)phosphoric acid triamide according to general formula (I)

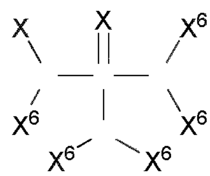
(I)

wherein

| | |
|---|---|
| $X^1$ | is O or S; |
| $R^1$ | is $C_1$-$C_{20}$-alkyl, $C_{3}$-$_{20}$-cycloalkyl, $C_6$-$C_{20}$-aryl, $C_6$-$C_{20}$-aryl-$C_1$-$C_4$-alkyl, or $C_1$-$C_6$-(di)alkylaminocarbonyl; |
| $R^2$ | is H, $C_1$-$C_{20}$-alkyl, $C_{3}$-$_{20}$-cycloalkyl, $C_6$-$C_{20}$-aryl, $C_6$-$C_{20}$-aryl-$C_1$-$C_4$-alkyl, or $C_1$-$C_6$-(di)alkylaminocarbonyl; or |
| $R^1$ and $R^2$ | together with the nitrogen atom linking them define a 5- or 6-membered saturated or unsaturated heterocyclic radical, which optionally comprises 1 or 2 further heteroatoms selected from the group consisting of N, O, and S; and |

$R^3$, $R^4$, $R^5$, and $R^6$ are independently of each other selected from the group consisting of H and $C_1$-$C_4$-alkyl; preferably wherein the mixture (A) comprises N-(n-butyl)thiophosphoric acid triamide (NBPT) and/or N-(n-propyl)thiophosphoric acid triamide (NPPT), in particular wherein the mixture (A) comprises N-(n-butyl)thiophosphoric acid triamide (NBPT) and N-(n-propyl)thiophosphoric acid triamide (NPPT).

In a preferred embodiment C2 of the third aspect, the solvent is selected from the group consisting of diethylene glycol, dipropylene glycol, triethylene glycol, di-ethyleneglycol monobutylether, triethyleneglycol-n-butylether, and mixtures thereof, in particular diethylene glycol and/or the solvent has a flashpoint (determined according to ISO 2719:2016) of more than 130° C, preferably more than 135° C, and in particular more than 140° C.

In a preferred embodiment C3 of the third aspect, the mixture (M) further comprises (D) at least one amine selected from the group consisting of

(D2) an amine containing not more than one amino group and at least three alkoxy- or hydroxy-substituted $C_2$ to $C_{12}$ alkyl groups $R^{21}$, wherein at least one of the groups $R^{21}$ is different to the other groups $R^{21}$,
(D3) an amine containing not more than one amino group and at least two alkoxy- or hydroxy-substituted $C_2$ to $C_{12}$ alkyl groups $R^{22}$, wherein at least one of the groups $R^{22}$ bears the alkoxy or hydroxy substituent at a secondary or tertiary carbon atom and wherein at least one of the groups $R^{22}$ is different to the other group(s) $R^{22}$,
(D4) an amine containing at least one saturated or unsaturated $C_8$ to $C_{40}$ alkyl group $R^{23}$,
(D5) a saturated or unsaturated heterocyclic amine which contains at least one oxygen atom as ring atom and which

does not contain a further alkoxy group, and

(D6) an amine selected from the group consisting of methyl-diethanolamine, methyl-diisopropanolamin, tetrahydroxy-propylethylenediamine, trimethylaminoethylethanolamine, N,N,N',N'-tetramethyl-1,6-hexanediamine, N, N' N"-tris(dimethylaminopropyl)hexahydrotriazine, and 2,2'-dimorpholinyldiethyl ether, preferably wherein the at least one amine is selected from the group consisting of

(D2) an amine containing not more than one amino group and at least three hydroxy-substituted $C_2$ to $C_8$, preferably $C_2$ to $C_5$, more preferably $C_2$ to $C_3$ alkyl groups $R^{21}$, wherein at least one of the groups $R^{21}$ is different to the other groups $R^{21}$,

(D3) an amine containing not more than one amino group and at least two alkoxy- or hydroxy-substituted $C_2$ to $C_8$, preferably $C_2$ to $C_5$, more preferably $C_2$ to $C_3$ alkyl groups $R^{22}$, wherein at least one of the groups $R^{22}$ bears the alkoxy or hydroxy substituent at a secondary or tertiary carbon atom and wherein at least one of the groups $R^{22}$ is different to the other group(s) $R^{22}$,

(D6) an amine selected from the group consisting of methyl-diethanolamine, methyl-diisopropanolamin, and N, N',N"-tris(dimethylaminopropyl)hexahydrotriazine,

more preferably wherein the at least one amine is methyl-diethanolamine (MDEOA), methyl- diisopropanolamin (MDIPOA), methyl-ethanol-isopropanolamin (MEIPOA), N, N',N"-tris(dimethylaminopropyl)hexahydrotriazine (NNN), 1,1 '-((2-Hydroxyethyl)imino)dipropan-2-ol (EDIPOA) or bis(hydroxyethyl)-isopropanolamine (DEIPA), and in particular bis(hydroxyethyl)-isopropanolamine (DEIPA).

In a preferred embodiment C4 of the third aspect, the mixture (M) is coated onto the urea-containing fertilizer (F1).

In a preferred embodiment C5 of the third aspect, the urea-containing fertilizer (F1) comprises at least one component selected from the group consisting of urea, urea ammonium nitrate (UAN), isobutylidene diurea (IBDU), crotonylidene diurea (CDU) and urea formaldehyde (UF), urea-acetaldehyde, and urea-glyoxal condensates, preferably wherein the urea-containing fertilizer (F1) is urea.

Figures

Figure 1 depicts NxPT (NPPT and NBPT) recovery of formulations F1 to F4 after one month open storage at 40° C.

Figure 2a depicts the cold stability of formulations comprising DEG+DML+DEIPA+NxPT or PG+DML+DEIPA+NxPT.

Figure 2b depicts the cold stability of formulations comprising DEG+DML+PEI+NxPT or PG+DML+PEI+NxPT.

Figure 3 depicts NxPT (referred to as A.i.) recovery of formulations F43, and F48 to F50 after two months open stage at 40° C and 50% rh.

Detailed Description

Before describing in detail exemplary embodiments of the present invention, definitions important for understanding the present invention are given.

As used in this specification and in the appended claims, the singular forms of "a" and "an" also include the respective plurals unless the context clearly dictates otherwise. In the context of the present invention, the terms "about" and "approximately" denote an interval of accuracy that a person skilled in the art will understand to still ensure the technical effect of the feature in question. The term typically indicates a deviation from the indicated numerical value of ±20 %, preferably ±15 %, more preferably ±10 %, and even more preferably ±5 %. It is to be understood that the term "comprising" is not limiting. For the purposes of the present invention the term "consisting of" is considered to be a preferred embodiment of the term "comprising of". If hereinafter a group is defined to comprise at least a certain number of embodiments, this is meant to also encompass a group which preferably consists of these embodiments only. Furthermore, the terms "first", "second", "third" or "(a)", "(b)", "(c)", "(d)" etc. and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein. In case the terms "first", "second", "third" or "(a)", "(b)", "(c)", "(d)", "i", "ii" etc. relate to steps of a method or use or assay there is no time or time interval coherence between the steps, i.e. the steps may be carried out simultaneously or there may be time intervals of seconds, minutes, hours, days, weeks, months or even years between such steps, unless otherwise indicated in the application as set forth herein above or below. It is to be understood that this invention is not limited to the particular methodology, protocols, reagents etc. described herein as these may vary. It is also to be understood that the terminology used herein is for the purpose of describing particular embodiments only, and is not intended to limit the scope of the present invention that will be limited only by the appended claims. Unless defined otherwise, all technical and

scientific terms used herein have the same meanings as commonly understood by one of ordinary skill in the art.

The term "wt.-%" as used throughout herein stands for "percent by weight".

The terms "does not contain", "does not comprise", "free of", and "being [···] free" as used herein are interchangeable and denote that the component referred to is not comprised in e.g. the respective composition/formulation.

The term "at least one" as used throughout herein above and below means one or more, preferably one or two, and thus typically refers individual compounds or mixtures/combinations.

As used herein, the term "(thio)phosphoric acid triamides" in each case covers thiophosphoric acid triamides and phosphoric acid triamides. Thus, the prefix "(thio)" as used herein in each case indicates that a group P=S or a group P=O is covered. It is noted that the terms "(thio)phosphoric acid triamide" and "(thio)phosphoric triamide" may interchangeably be used.

The organic moieties mentioned in the above definitions of the variables are collective terms for individual listings of the individual group members. The prefix $C_n$-$C_m$ indicates in each case the possible number of carbon atoms in the group.

The term "alkyl" as used herein denotes in each case a straight-chain or branched alkyl group having usually from 1 to 20 carbon atoms, preferably from 1 to 10 carbon atoms, frequently from 1 to 6 carbon atoms, more preferably 1 to 4 carbon atoms, e.g. 3 or 4 carbon atoms. Examples of alkyl groups are methyl, ethyl, n-propyl, iso-propyl, n-butyl, 2-butyl, isobutyl, tert-butyl, n-pentyl, 1-methylbutyl, 2-methylbutyl, 3-methylbutyl, 2,2-dimethylpropyl, 1-ethylpropyl, n-hexyl, 1,1-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, and 1-ethyl-2-methylpropyl. Preferred alkyl groups are methyl, ethyl, n-propyl, isopropyl, n-butyl, isobutyl, sec-butyl, tert-butyl, n-pentyl, isopentyl, neopentyl, tert-pentyl, hexyl, 2-methylpentyl, n-heptyl, n-octyl, 2-ethylhexyl, isooctyl, nonyl, isononyl, decyl, and isodecyl.

The term "cycloalkyl" as used herein denotes in each case a monocyclic cycloaliphatic radical having usually from 3 to 20 carbon atoms, preferably from 3 to 10 carbon atoms, more preferably from 3 to 6 carbon atoms, such as cyclopropyl, cyclobutyl, cyclopentyl, cyclohexyl, cycloheptyl, cyclooctyl, cyclononyl and cyclodecyl or cyclopropyl, cyclobutyl, cyclopentyl and cyclohexyl.

The term "aryl" includes mono-, bi- or tricyclic aromatic radicals having usually from 6 to 14, preferably 6, 10, or 14 carbon atoms. Exemplary aryl groups include phenyl, naphthyl and anthracenyl. Phenyl is preferred as aryl group.

The term "(di)alkylaminocarbonyl" refers to a (di)alkylamino group, i.e. an amino group comprising 1 or 2 alkyl substituents, which is bonded to the remainder of the molecule via the carbon atom of a carbonyl group (C=O).

The term "carboxylic acid amide" as used herein denotes in each case a the condensation product of a carboxylic acid and an amine.

The term "glycol ethers" as used herein refers to ethers comprising 1 to 4 glycol moieties. In certain embodiments, one or more carbon atom(s) of one or more glycol moiety/moieties may further be substituted by $C_1$-$C_4$-alkyl, preferably methyl. The glycol ether preferably has a molecular mass of less than 400 g/mol, more preferably less than 300 g/mol, and in particular less than 250 g/mol. In a preferred embodiment, the glycol ether has a molecular mass of 76 to 400 g/mol, preferably of 85 to 300 g/mol, more preferably of 90 to 250 g/mol, and in particular of 95 to 210 g/mol.

The term "glycerin ether" as used herein refers to ethers comprising 1 to 4 glycerin moieties. In certain embodiments, one or more carbon atom(s) of one or more glycerin moiety/moieties may further be substituted by $C_1$-$C_4$-alkyl, preferably methyl. The glycerin ether preferably has a molecular mass of less than 450 g/mol, more preferably less than 350 g/mol, and in particular less than 300 g/mol. In a preferred embodiment, the glycol ether has a molecular mass of 106 to 450 g/mol, preferably of 110 to 350 g/mol, more preferably of 120 to 300 g/mol, and in particular of 130 to 250 g/mol.

It is to be understood that, preferably, also stereoisomers, tautomers, N-oxides, and salts of the (thio)phosphoric acid triamide are covered by the term "(thio)phosphoric acid triamide". Stereoisomers are present, if the compounds contain one or more centers of chirality. In this case, the compounds will be present in the form of different enantiomers or diastereomers, if more than one center of chirality is present. The term "(thio)phosphoric acid triamide" preferably covers every possible stereoisomer, i.e. single enantiomers or diastereomers, as well as mixtures thereof. Tautomers include, e.g., keto-enol tautomers. N-oxides may be formed under oxidative conditions, if tertiary amino groups are present. Salts may be formed, e.g., with the basic amino groups of the (thio)phosphoric acid triamide. Anions, which stem from an acid, with which the (thio)phosphoric acid triamide may have been reacted, are e.g. chloride, bromide, fluoride, hydrogensulfate, sulfate, dihydrogenphosphate, hydrogenphosphate, phosphate, nitrate, bicarbonate, carbonate, hexafluorosilicate, hexafluorophosphate, benzoate, and the anions of $C_1$-$C_4$-alkanoic acids, preferably formate, acetate, propionate and butyrate.

The (thio)phosphoric acid triamide according to the invention are preferably solid compounds with a melting point of at least 40° C, preferably at least 50° C, or with a melting point of at least 60° C, preferably at least 80° C, more preferably at least 85° C. Typically, the melting point is at most 200° C, preferably at most 185° C, more preferably at most 150° C, even

more preferably at most 120° C, most preferably at most 100° C.

In connection with the melting points as provided herein above and below, it is to be understood that the defined melting points preferably refer to the melting points of the (thio)phosphoric acid triamide in pure form, i.e. not contaminated with impurities of more than 5 wt.-%, preferably not contaminated with impurities of more than 2 wt.-%, and not in the form of a mixture with another (thio)phosphoric acid triamide.

When referring to compositions and the weight percent of the therein comprised ingredients it is to be understood that according to the present invention the overall amount of ingredients does not exceed 100% (± 1% due to rounding).

Preferred embodiments regarding the use of solvent (C), the urease inhibitor formulation (UI), and the fertilizer composition (1) are described in detail hereinafter. It is to be understood that the preferred embodiments of the invention are preferred alone or in combination with each other.

As indicated above, the present invention relates in one aspect to the use of a solvent (C) selected from the group consisting of glycol ether, glycerin ether, and mixtures thereof for stabilizing at least one (thio)phosphoric acid triamide in a fertilizer composition (1) comprising a urea-containing fertilizer (F1) and a urease inhibitor formulation (UI) comprising a mixture (A) comprising the at least one (thio)phosphoric acid triamide and the solvent (C), wherein the urease inhibitor formulation (UI) is polymer free.

Further disclosed is the use of a solvent (C) selected from the group consisting of glycol ether, glycerin ether, and mixtures thereof for stabilizing at least one (thio)phosphoric acid triamide in a fertilizer composition (1) comprising a urea-containing fertilizer (F1) and a urease inhibitor formulation (UI) comprising a mixture (A) comprising the at least one (thio) phosphoric acid triamide and the solvent (C).

The at least one (thio)phosphoric acid triamide (e.g. N-(n-butyl)thiophosphoric acid triamide (NBPT) and N-(n-propyl)thiophosphoric acid triamide (NPPT)) present in the fertilizer composition (1) according to the present invention preferably has a purity of more than 90%, more preferably more than 95%, and in particular more than 97% or of 90 to 100%, more preferably 95 to 99%, and in particular of 97 to 99%.

In a preferred embodiment, the urease inhibitor formulation (UI) further comprises
(B) a polar aprotic solvent. Preferably, the polar aprotic solvent is a carboxylic acid amide, more preferably N,N-dimethyl lactamide. Preferably, the polar aprotic solvent improves the cold stability of the urease inhibitor formulation (UI).

Within the meaning of the present invention, it is to be understood that the "cold stability" denotes the lowest temperature that does not lead to crystallization or freezing of the urease inhibitor formulation (UI) after one week closed storage and after one week closed storage after adding a seed crystal.

The urea-containing fertilizer (F1) can be in crystalline, granulated, compacted, prilled or ground form, and is preferably in granulated from.

The urease inhibitor formulation (UI) can be applied to or on the urea-containing fertilizer (F1) by either mixing the urease inhibitor formulation (UI) in either liquid or solid form, with the urea-containing fertilizer (F1), or incorporating them into the urea-containing fertilizer (F1) by granulation, compacting or prilling, by addition of corresponding fertilizer mixture or to a mash or melt. Preferably, the urease inhibitor formulation (UI) is applied to the surface of existing granules, compacts or prills of the urea-containing fertilizer (F1) by means of spraying, powder application or impregnating, for example. This can also be done using further auxiliaries such as adhesive promoters or encasing materials. Examples of apparatuses suitable for performing such application include plates, drums, mixers or fluidized-bed apparatus, although application may also take place on conveyor belts or their discharge points or by means of pneumatic conveyors for solids. A concluding treatment with anticaking agents and/or antidust agents is likewise possible. The urease inhibitor formulation (UI) is used in the context of fertilization with the urea-containing fertilizer (F1). Application takes place preferably to an agriculturally or horticulturally exploited plot.

In a preferred embodiment, the urease inhibitor formulation (UI) is coated onto the urea-containing fertilizer (F1). Coating may be achieved by any known in the art method.

In a preferred embodiment, the urease inhibitor formulation (UI) is sprayed onto the urea-containing fertilizer (F1), preferably using a rotating disc.

In a preferred embodiment, the urea-containing fertilizer (F1) comprises at least one component selected from the group consisting of urea, urea ammonium nitrate (UAN), isobutylidene diurea (IBDU), crotonylidene diurea (CDU) and urea formaldehyde (UF), urea-acetaldehyde, and urea-glyoxal condensates, preferably wherein the urea-containing fertilizer (F1) is urea.

In a preferred embodiment, the solvent (C) is a glycol ether, preferably selected from the group consisting of diethylene glycol, dipropylene glycol, triethylene glycol, di-ethyleneglycol monobutylether, triethyleneglycol-n-butylether, and mixtures thereof, more preferably selected from the group consisting of diethylene glycol, dipropylene glycol, and mixtures thereof, and in particular diethylene glycol.

In a preferred embodiment, the solvent (C) has a flashpoint (determined according to ISO 2719:2016) of more than 130° C, preferably more than 135° C, and in particular more than 140 ° C. The solvent (C) may have a flashpoint (determined according to ISO 2719:2016) of at most 400° C, or of at most 300° C.

In a preferred embodiment, the solvent (C) has a viscosity (determined at 20° C according to Rotation viscometer;

OECD test Guideline 114) of 2 to 60 mPas, preferably of 3 to 45 mPas, and in particular of 4 to 40 mPas.

In a preferred embodiment, the mixture (A) comprises at least one (thio)phosphoric acid triamide according to general formula (I)

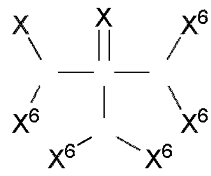 (I)

wherein

| | |
|---|---|
| $X^1$ | is O or S; |
| $R^1$ | is $C_1$-$C_{20}$-alkyl, $C_3$-$C_{20}$-cycloalkyl, $C_6$-$C_{20}$-aryl, $C_6$-$C_{20}$-aryl-$C_1$-$C_4$-alkyl, or $C_1$-$C_6$-(di)alkylaminocarbonyl; |
| $R^2$ | is H, $C_1$-$C_{20}$-alkyl, $C_3$-$C_{20}$-cycloalkyl, $C_6$-$C_{20}$-aryl, $C_6$-$C_{20}$-aryl-$C_1$-$C_4$-alkyl, or $C_1$-$C_6$-(di)alkylaminocarbonyl; or |
| $R^1$ and $R^2$ | together with the nitrogen atom linking them define a 5- or 6-membered saturated or unsaturated heterocyclic radical, which optionally comprises 1 or 2 further heteroatoms selected from the group consisting of N, O, and S; and |

$R^3$, $R^4$, $R^5$, and $R^6$ are independently of each other selected from the group consisting of H and $C_1$-$C_4$-alkyl.

In a preferred embodiment, the mixture (A) comprises at least two (thio)phosphoric acid triamides, preferably having the general formula (I) as above-outlined. In this connection, it is to be understood that the at least two (thio) phosphoric acid triamides are structurally different, e.g. have at least one different moiety according to general formula (I) as above-outlined.

In a preferred embodiment, the mixture (A) comprises at least N-(n-propyl)thiophosphoric acid triamide (NPPT).

In a preferred embodiment, the mixture (A) comprises at least N-(n-butyl)thiophosphoric acid triamide (NBPT).

In a preferred embodiment, the mixture (A) comprises N-(n-butyl)thiophosphoric acid triamide (NBPT) and/or N-(n-propyl)thiophosphoric acid triamide (NPPT), preferably N-(n-butyl)thiophosphoric acid triamide (NBPT) and N-(n-propyl)thiophosphoric acid triamide (NPPT).

In a preferred embodiment, the at least one (thio)phosphoric acid triamide is comprised in the urease inhibitor formulation (UI) in an amount of 5 to less than 45 wt.-%, preferably of 10 to 42 wt.-%, and in particular of 15 to 40 wt.-%, based on the total amount of the urease inhibitor formulation (UI). In a particular preferred embodiment, the at least one (thio)phosphoric acid triamide is comprised in the urease inhibitor formulation (UI) in an amount of 15 to 38 wt.-%, preferably of 18 to 35 wt.-%, and in particular of 20 to 30 wt.-%, based on the total amount of the urease inhibitor formulation (UI). Preferably, the urease inhibitor formulation (UI) comprises the sum of N-(n-butyl)thiophosphoric acid triamide (NBPT) and N-(n-propyl)thiophosphoric acid triamide (NPPT) in an amount of 5 to less than 45 wt.-%, preferably of 10 to 42 wt.-%, more preferably 15 to 40 wt.-%, even more preferably 15 to 38 wt.-%, still more preferably of 18 to 35 wt.-%, and in particular of 20 to 30 wt.-%, based on the total amount of the urease inhibitor formulation (UI).

The urease inhibitor formulation (UI) further comprises

(D) at least one amine selected from the group consisting of

(D2) an amine containing not more than one amino group and at least three alkoxy- or hydroxy-substituted $C_2$ to $C_{12}$ alkyl groups $R^{21}$, wherein at least one of the groups $R^{21}$ is different to the other groups $R^{21}$,

(D3) an amine containing not more than one amino group and at least two alkoxy- or hydroxy-substituted $C_2$ to $C_{12}$ alkyl groups $R^{22}$, wherein at least one of the groups $R^{22}$ bears the alkoxy or hydroxy substituent at a secondary or tertiary carbon atom and wherein at least one of the groups $R^{22}$ is different to the other group(s) $R^{22}$,

(D4) an amine containing at least one saturated or unsaturated $C_8$ to $C_{40}$ alkyl group $R^{23}$,

(D5) a saturated or unsaturated heterocyclic amine which contains at least one oxygen atom as ring atom and which does not contain a further alkoxy group, and

(D6) an amine selected from the group consisting of methyl-diethanolamine, methyl-diisopropanolamin, tetrahydroxy-propylethylenediamine, trimethylaminoethylethanolamine, N,N,N',N'-tetramethyl-1,6-hexanediamine, N, N' ,N "-tris(dimethylaminopropyl)hexahydrotriazine, and 2,2'-dimorpholinyldiethyl ether.

The at least one amine is preferably selected from the group consisting of

(D2) an amine containing not more than one amino group and at least three hydroxy-substituted $C_2$ to $C_8$, preferably

$C_2$ to $C_5$, more preferably $C_2$ to $C_3$ alkyl groups $R^{21}$, wherein at least one of the groups $R^{21}$ is different to the other groups $R^{21}$,

(D3) an amine containing not more than one amino group and at least two alkoxy- or hydroxy-substituted $C_2$ to $C_8$, preferably $C_2$ to $C_5$, more preferably $C_2$ to $C_3$ alkyl groups $R^{22}$, wherein at least one of the groups $R^{22}$ bears the alkoxy or hydroxy substituent at a secondary or tertiary carbon atom and wherein at least one of the groups $R^{22}$ is different to the other group(s) $R^{22}$,

(D6) an amine selected from the group consisting of methyl-diethanolamine, methyl-diisopropanolamin, and N, N',N"-tris(dimethylaminopropyl)hexahydrotriazine.

Generally, the at least one amine (D) can be contained in varying amounts in the urease inhibitor formulation (UI). Preferably, the amount of (D) is not more than 80 wt.-%, more preferably not more than 60 wt.-%, most preferably not more than 40 wt.-%, most particularly preferably not more than 30 wt.-%, particularly not more than 15 wt.-%, for example not more than 10 wt.-%, based on the total weight of the urease inhibitor formulation (UI). Preferably, the amount of amine (D) is at least 1 wt.-%, more preferably at least 2 wt.-%, most preferably at least 3 wt.-%, most particularly preferably at least 4 wt.-%, particularly at least 5 wt.-%, for example at least 6 wt.-%, based on the total weight of the urease inhibitor formulation (UI).

Further disclosed is (D1) polymeric polyamine, which may be present in a non-polymer free urease inhibitor formulation (UI).

Generally, (D1) can be any polymeric polyamine, and is preferably a polyalkyleneimine or polyvinylamine, more preferably a polyalkyleneimine, most preferably a polyethyleneimine, polypropyleneimine, or polybutyleneimine, particularly a polyethyleneimine.

(D1) can be any polymeric polyamine comprising ethyleneimine (-CH2CH2NH-) as monomeric units, including homopolymers and any copolymers of ethyleneimine, and is preferably a homopolymer of ethyleneimine. Copolymers can be alternating, periodic, statistical or block copolymers.

Generally, (D1) can be of any polymer structure, for example a linear polymer, a ring polymer, a cross-linked polymer, a branched polymer, a star polymer, a comb polymer, a brush polymer, a dendronized polymer, or a dendrimer etc. (D1) can be an essentially linear polymer, and is preferably a linear polymer.

Polyethyleneimines which may be used are polyethyleneimine homopolymers which may be present in uncrosslinked or crosslinked form. The polyethyleneimine homopolymers can be prepared by known processes, as described, for example, in Römpps (Chemie Lexikon, 8th edition, 1992, pages 3532-3533), or in Ullmanns Enzyklopädie der Technischen Chemie, 4th edition, 1974, vol. 8, pages 212-213. and the literature stated there. They have a molecular weight in the range from about 200 to 1 000 000 g/mol. Corresponding commercial products are for example available under the name Lupasol® from BASF SE.

The polyethyleneimine (D1) can be a polyethylenimine having a degree of branching in the range of from 0.1 to 0.95 (also referred to as "highly branched polyethyleneimine"), and preferably a polyethylenimine having a degree of branching in the range of from 0.25 to 0.90, more preferably a polyethylenimine having a degree of branching in the range of from 0.30 to 0.80, and most preferably a polyethylenimine having a degree of branching in the range of 0.50 to 0.80.

Highly branched polyethyleneimines are characterized by its high degree of branching, which can be determined for example via $^{13}$C-NMR spectroscopy, preferably in $D_2O$, and is defined as follows:

$$\text{Degree of branching} = D + T/D + T + L$$

D (dendritic) equals the percentage of tertiary amino groups, L (linear) equals the percentage of secondary amino groups, and T (terminal) equals the percentage of primary amino groups.

Generally, the polymeric polyamine (D1) can have different weight average molecular weights. The weight average molecular weight of (D1) is preferably at least 200, more preferably at least 400, most preferably at least 550, particularly at least 650, for example at least 750. The weight average molecular weight of (D1) is preferably not more than 10,000, more preferably not more than 4,000, most preferably not more than 1,900, particularly not more than 1,500, for example not more than 1,350. The weight average molecular weight can be determined by standard gel permeation chromatography (GPC) known to the person skilled in the art.

In connection with polymeric amines, polyalkyleneimine or polyvinylamine, more preferably a polyalkyleneimine, most preferably a polyethyleneimine, polypropyleneimine, or polybutyleneimine shall be named.

According to another embodiment, (D) is (D2) an amine containing not more than one amino group and at least three alkoxy- or hydroxy-substituted $C_2$ to $C_{12}$ alkyl groups $R^{21}$, wherein at least one of the groups $R^{21}$ is different to the other groups $R^{21}$.

A number of groups $R^{21}$ within (D2) is at least 3, preferably 3 to 5, more preferably 3 to 4, and most preferably 3.

The number of carbon atoms in each group $R^{21}$ within (D2) is 2 to 12, preferably 2 to 9, more preferably 2 to 7, most

preferably 2 to 5, particularly preferably 2 to 4, particularly 2 to 3, for example 3, wherein said number of carbon atoms does not include carbon atoms in any alkoxy groups or any other substituents of $R^{21}$.

The groups $R^{21}$ within (D2) are alkoxy- or hydroxy-substituted, preferably hydroxy-substituted.

For one amine (D2), among the at least three groups $R^{21}$, at least one of the groups $R^{21}$ is different to the other groups $R^{21}$, preferably one of the groups $R^{21}$ is different to the other groups $R^{21}$.

Preferably at least one of the groups $R^{21}$, more preferably at least two of the groups $R^{21}$, most preferably at least three of the groups $R^{21}$, particularly all groups $R^{21}$ is or are covalently bound to the amino group of the amine (D2).

According to another preferred embodiment, (D2)

- is an amine containing not more than one amino group and at least three hydroxy-substituted $C_2$ to $C_8$ - or preferably $C_2$ to $C_5$ - alkyl groups $R^{21}$, wherein at least one of the groups $R^{21}$ is different to the other groups $R^{21}$,
- is preferably an amine containing not more than one amino group and at least three hydroxy-substituted $C_2$ to $C_3$ alkyl groups $R^{21}$, wherein at least one of the groups $R^{21}$ is different to the other groups $R^{21}$,
- is more preferably an amine containing not more than one amino group and three hydroxy-substituted $C_2$ to $C_3$ alkyl groups $R^{21}$ which are covalently bound to the amino group, wherein one of the groups $R^{21}$ is different to the other groups $R^{21}$, and
- is for example an amine selected from the group consisting of Bis(hydroxyethyl)-isopropanolamine (DEIPA), and 1,1'-((2-Hydroxyethyl)imino)dipropan-2-ol.

According to another preferred embodiment, (D2) is an amine $N(R^{21})_3$ wherein $R^{21}$ is a an alkoxy- or hydroxy-substituted - preferably a hydroxyl-substituted - $C_2$ to $C_{12}$ - preferably a $C_2$ to $C_7$, more preferably a $C_2$ to $C_3$ - alkyl group and wherein one of the groups $R^{21}$ is different to the other group $R^{21}$.

According to another preferred embodiment, (D2) is an amine $N(R^{21})_3$ wherein $R^{21}$ is a an alkoxy- or hydroxy-substituted - preferably a hydroxyl-substituted - $C_2$ to $C_{12}$ - preferably a $C_2$ to $C_7$, more preferably a $C_2$ to $C_3$ - alkyl group and wherein one of the groups $R^{21}$ is different to the other group $R^{21}$ and wherein at least one of the groups $R^{21}$ bears the alkoxy or hydroxy substituent at a secondary or tertiary carbon atom.

According to another embodiment, (D) is (D3) an amine containing not more than one amino group and at least two alkoxy- or hydroxy-substituted $C_2$ to $C_{12}$ alkyl groups $R^{22}$, wherein at least one of the groups $R^{22}$ bears the alkoxy or hydroxy substituent at a secondary or tertiary carbon atom and wherein at least one of the groups $R^{22}$ is different to the other group(s) $R^{22}$.

A number of groups $R^{22}$ within (D3) is at least 2, preferably 2 to 5, more preferably 2 to 4, and most preferably 2 to 3, for example 2.

The number of carbon atoms in each group $R^{22}$ within (D3) is 2 to 12, preferably 2 to 9, more preferably 2 to 7, most preferably 2 to 5, particularly preferably 2 to 4, particularly 2 to 3, for example 3, wherein said number of carbon atoms does not include carbon atoms in any alkoxy groups or any other substituents of $R^{22}$.

The groups $R^{22}$ within (D3) are alkoxy- or hydroxy-substituted, preferably hydroxy-substituted.

For one amine (D3), among the at least two groups $R^{22}$, at least one of the groups $R^{22}$ is different to the other group(s) $R^{22}$, preferably one of the groups $R^{22}$ is different to the other group(s) $R^{22}$.

Preferably at least one of the groups $R^{22}$, more preferably at least two of the groups $R^{22}$, most preferably all groups $R^{22}$ is or are covalently bound to the amino group of the amine (D3).

Preferably at least one of the groups $R^{22}$, more preferably one of the groups $R^{22}$ bears the alkoxy or hydroxy substituent at a secondary or tertiary carbon atom, particularly at a secondary carbon atom.

According to another preferred embodiment, (D3)

- is an amine containing not more than one amino group and at least two hydroxy-substituted $C_2$ to $C_7$ alkyl groups $R^{22}$, wherein at least one of the groups $R^{22}$ bears the hydroxy substituent at a secondary or tertiary carbon atom and wherein at least one of the groups $R^{22}$ is different to the other group(s) $R^{22}$,
- is more preferably an amine containing not more than one amino group and at least two hydroxy-substituted $C_2$ to $C_4$ alkyl groups $R^{22}$, wherein at least one of the groups $R^{22}$ bears the hydroxy substituent at a secondary carbon atom and wherein at least one of the groups $R^{22}$ is different to the other group(s) $R^{22}$,
- is most preferably an amine containing not more than one amino group and two hydroxy-substituted $C_2$ to $C_3$ alkyl groups $R^{22}$ which are covalently bound to the amino group of the amine (D3), wherein at least one of the groups $R^{22}$ bears the hydroxy substituent at a secondary carbon atom and wherein one of the groups $R^{22}$ is different to the other group $R^{22}$,
- is for example an amine selected from the group consisting of 1-((2-hydroxyethyl)amino)-propan-2-ol, and N-Methyl-N-hydroxyethyl-isopropanolamine.

According to another preferred embodiment, (D3) is an amine $R^{24}N(R^{22})_2$ wherein $R^{24}$ is H or a $C_1$ to $C_{12}$-

preferably a $C_1$ to $C_7$, more preferably a $C_1$ to $C_3$ - alkyl group and $R^{22}$ is an alkoxy- or hydroxy-substituted - preferably a hydroxyl-substituted - $C_2$ to $C_{12}$ - preferably a $C_2$ to $C_7$, more preferably a $C_2$ to $C_3$ - alkyl group and wherein at least one of the groups $R^{22}$ bears the hydroxy substituent at a secondary carbon atom and wherein one of the groups $R^{22}$ is different to the other group $R^{22}$.

According to another embodiment, (D) is (D4) an amine containing at least one saturated or unsaturated $C_8$ to $C_{40}$ alkyl group $R^{23}$.

The number of carbon atoms in each group $R^{23}$ within (D4) is 8 to 40, preferably 8 to 32, more preferably 8 to 24, most preferably 8 to 19, particularly preferably 8 to 16.

The group $R^{23}$ within (D4) is saturated or unsaturated, preferably unsaturated.

According to another preferred embodiment, (D4) contains at least one alkoxy or hydroxy group, more preferably at least one alkoxy and at least one hydroxy groups, most preferably at least two alkoxy and at least one hydroxyl group, particularly at least four alkoxy and at least one hydroxyl group.

For example, (D4) is an amine selected from the group consisting of: ethoxylated (2) cocoalkylamine, ethoxylated (5) cocoalkylamine, ethoxylated (15) cocoalkylamine, ethoxylated (2) oleylamine, lauryl-dimethylamine, oleyl-dimethylamine, and 2-propylheptylamine ethoxylate (5 EO), 2-propylheptylamine ethoxylate (10 EO), and 2-propylheptylamine ethoxylate (20 EO).

According to another embodiment, (D) is (D5) a saturated or unsaturated heterocyclic amine which contains at least one oxygen atom as ring atom and which does not contain a further alkoxy group.

The term "heterocyclic amine" stands for a heterocyclic compound in which at least one ring atom of the heterocyclic ring is a nitrogen atom.

The heterocyclic amine (D5) is saturated or unsaturated, preferably saturated.

The heterocyclic amine (D5) contains preferably a 5-, 6- or 7-membered heterocyclic ring, more preferably a 5- or 6-membered ring, most preferably a 6-membered ring.

The heterocyclic amine (D5) contains at least one, more preferably 1 to 3, most preferably 1 to 2, particularly one oxygen atom(s) as ring atom(s) of the heterocyclic ring.

The heterocyclic amine (D5) is preferably a morpholine or morpholine derivative, more preferably N-alkyl morpholine, most preferably N-methyl, N-ethyl, N-propyl, or N-butyl morpholine, for example N-methyl morpholine.

The at least one amine is not a polymeric polyamine.

It is particularly preferred that, if present, the at least one amine (D) is (D2) an amine containing not more than one amino group and at least three hydroxy-substituted $C_2$ to $C_8$, preferably $C_2$ to $C_3$, more preferably $C_2$ to $C_3$ alkyl groups $R^{21}$, wherein at least one of the groups $R^{21}$ is different to the other groups $R^{21}$, in particular wherein the amine is bis(hydroxyethyl)-isopropanolamine (DEIPA).

In a particular embodiment, the urease inhibitor formulation (UI) further comprises at least one amine selected from the group consisting of methyl-diethanolamine (MDEOA), methyl-diisopropanolamin (MDIPOA), methyl-ethanol-isopropanolamin (MEIPOA), N, N',N"-tris(dimethylaminopropyl)hexahydrotriazine (NNN), 1,1 '-((2-Hydroxyethyl)imino) dipropan-2-ol (EDIPOA), bis(hydroxyethyl)-isopropanolamine (DEIPA), and mixtures thereof.

The inhibitor formulation (UI) is polymer free. In a preferred embodiment, the fertilizer composition (1) is polymer free.

In a preferred embodiment, the weight ratio of the solvent (C) to the at least one (thio)phosphoric acid triamide is from 1:3 to 20:1, preferably from 1:2 to 10:1, more preferably from 1:1 to 5:1 and in particular from 2:1 to 3:1. In this connection it is to be understood that if more than one (thio)phosphoric acid triamide is present in the formulation, the weight ratio refers to the sum of all (thio)phosphoric acid triamides.

In a specific preferred embodiment, the weight ratio of the solvent (C) to the sum of N-(n-butyl)thiophosphoric acid triamide (NBPT) and N-(n-propyl)thiophosphoric acid triamide (NPPT) is from 1:3 to 20:1, preferably from 1:2 to 10:1, more preferably from 1:1 to 5:1 and in particular from 2:1 to 3:1.

In a preferred embodiment, the at least one (thio)phosphoric acid triamide is a mixture of N-(n-butyl)thiophosphoric acid triamide (NBPT) to N-(n-propyl)thiophosphoric acid triamide (NPPT), wherein the weight ratio of N-(n-butyl) thiophosphoric acid triamide (NBPT) to N-(n-propyl)thiophosphoric acid triamide (NPPT) is from 0.5:1 to 30:1, preferably from 1:1 to 20:1, more preferably from 1.5:1 to 20:1, even more preferably from 2:1 to 10:1, and in particular from 2.5:1 to 5:1.

In a preferred embodiment, the fertilizer composition (1) comprises the sum of N-(n-butyl)thiophosphoric acid triamide (NBPT) and N-(n-propyl)thiophosphoric acid triamide (NPPT) in an amount of 100 to 1000 ppm, preferably of 200 to 800 ppm, and in particular of 300 to 600 ppm.

If present, the weight ratio of the at least one amine (D) to the sum of N-(n-butyl)thiophosphoric acid triamide (NBPT) and N-(n-propyl)thiophosphoric acid triamide (NPPT) is preferably from 1:40 to 2:1, more preferably from 1:20 to 1:1, even more preferably from 1:10 to 1:2, and in particular from 1:6 to 1:3. In this connection it is to be understood that if more than one amine (D) is present in the formulation, the weight ratio refers to the sum of all amines (D).

The fertilizer composition (1) according to the present invention may further comprise components, such as a

conditioning agent, an anti-caking agent, a pigment, a dye, formaldehyde, urea formaldehyde, and combinations thereof. In this connection, it is to be understood that urea formaldehyde is the reaction product of urea and formaldehyde (also known as UF).

Examples of a conditioning agent include, but are not limited to mineral oil and the like. In some embodiments, the conditioning agent is added to the fertilizer composition (1) after it is solidified into granules, prills, etc. In one embodiment, the conditioning agent is combined with the fertilizer composition (1) in a ratio of about 3:1 fertilizer composition (1) to conditioning agent.

Examples of an anti-caking agent include, but are not limited to lime, gypsum, silicon dioxide, kaolinite, or polyvinyl alcohol (PVA).

The pigments or dyes can be any available color are typically considered non-hazardous. In some embodiments, the dye is present in less than about 1 wt.-%, or less than about 2 wt.-%, or less than about 3 wt.-%, or of about 1 to 2 wt.-%, based on the total amount of the fertilizer composition (1).

In a preferred embodiment, the urease inhibitor formulation (UI) does not comprise dimethyl sulfoxide. Without being bound to any theory, it is assumed that formulations that do not comprise dimethyl sulfoxide have a reduced odor nuisance. Such formulations hence provide a sufficient fertilizer formulation having a reduced odor nuisance. In a further preferred embodiment, the urease inhibitor formulation (UI) does not comprise 1,2-propylene glycol.

In a preferred embodiment, at least 85 wt.-%, preferably at least 90 wt.-%, more preferably at least 95 wt.-%, and in particular at least 97 wt.-%, of the at least one (thio)phosphoric acid triamide comprised in the urease inhibitor formulation (UI) are stabile over a period of 14 days storage in closed bottles at 54 ° C. It is particularly preferred that at least 85 wt.-%, preferably at least 90 wt.-%, more preferably at least 95 wt.-%, and in particular at least 97 wt.-%, of the mixture (A) comprises N-(n-butyl)thiophosphoric acid triamide (NBPT) and N-(n-propyl)thiophosphoric acid triamide (NPPT) comprised in the urease inhibitor formulation (UI) are stabile over a period of 14 days storage in closed bottles at 54° C. Preferably, up to 99.5 wt.-% of the at least one (thio)phosphoric acid triamide is stable in the urease inhibitor formulation (UI) over a period of 14 days storage in closed bottles at 54 ° C.

In a preferred embodiment, the pH of the urease inhibitor formulation (UI) is in the range of 6 to 12, more preferably of 7 to 11, and in particular of 8 to 10.

In a preferred embodiment, the pH change delta of the urease inhibitor formulation (UI) after two weeks storage at 54° C is less than $\pm 0.8$, preferably less than $\pm 0.5$, more preferably less than $\pm 0.3$, and in particular less than $\pm 0.2$. In this connection it is to be understood that the pH change delta is determined by determining the pH value of the freshly produced urease inhibitor formulation (UI) (providing "pH value F") and of the urease inhibitor formulation (UI) after two weeks storage at 54° C (providing "pH value S"). Preferably, the urease inhibitor formulation (UI) is stored in a closed container. The pH change delta is calculated via formula (I):

$$\text{pH change delta} = \text{pH value F} - \text{pH value S} \qquad \text{(formula I)}$$

In a preferred embodiment, the urease inhibitor formulation (UI) has a viscosity at a shear rate of $100 s^{-1}$ determined according to CIPAC method 192 (rotational rheometer) of at most 100 mPas, preferably at most 90 mPas, more preferably at most 80 mPas, and in particular at most 75 mPas at 20° C. It is further preferred that the urease inhibitor formulation (UI) has a viscosity at a shear rate of $100 s^{-1}$ determined according to CIPAC method 192 (rotational rheometer) of 1 to 100 mPas, preferably of 5 to 90 mPas, most preferably of 10 to 80 mPas, and in particular of 12 to 75 mPas at 20° C.

In a preferred embodiment, the urease inhibitor formulation (UI) has a viscosity at a shear rate of $100 s^{-1}$ determined according to CIPAC method 192 (rotational rheometer) of at most 170 mPas, preferably at most 160 mPas, more preferably at most 150 mPas, and in particular at most 140 mPas at 10° C. It is further preferred that the urease inhibitor formulation (UI) has a viscosity at a shear rate of $100 s^{-1}$ determined according to CIPAC method 192 (rotational rheometer) of 5 to 170 mPas, preferably of 10 to 160 mPas, more preferably of 15 to 150 mPas, and in particular of 20 to 140 mPas at 10° C.

In a preferred embodiment, the urease inhibitor formulation (UI) has a viscosity at a shear rate of $100 s^{-1}$ determined according to CIPAC method 192 (rotational rheometer) of at most 100 mPas, preferably at most 90 mPas, more preferably at most 80 mPas, and in particular at most 75 mPas at 20° C and of at most 170 mPas, preferably at most 160 mPas, more preferably at most 150 mPas, and in particular at most 140 mPas at 10° C.

In a preferred embodiment, the urease inhibitor formulation (UI) has a viscosity at a shear rate of $100 s^{-1}$ determined according to CIPAC method 192 (rotational rheometer) of 1 to 90 mPas, preferably of 5 to 85 mPas, most preferably of 10 to 80 mPas, and in particular of 12 to 75 mPas at 20° C, after a period of 14 days storage in closed bottles at 54° C.

The urease inhibitor formulation (UI) according to the present invention preferably has a pH of 6 to 12, more preferably of 7 to 11, and in particular of 8 to 10.

The fertilizer composition (1) according to the present invention preferably has a pH of 7 to 12, more preferably of

8 to 11.

In one preferred embodiment, at least 40 wt.-%, preferably at least 45 wt.-%, more preferably at least 50 wt.-%, and in particular at least 55 wt.-%, of the at least one (thio)phosphoric acid triamide are stabile over a period of one month open storage at 40 ° C at 50% relative humidity (rh).

In one preferred embodiment, at least 40 wt.-%, preferably at least 45 wt.-%, more preferably at least 50 wt.-%, and in particular at least 55 wt.-%, of the at least one (thio)phosphoric acid triamide are stabile over a period of two months open storage at 40° C at 50% relative humidity (rh).

In one preferred embodiment, at least 40 wt.-%, preferably at least 45 wt.-%, more preferably at least 50 wt.-%, and in particular at least 55 wt.-%, of the sum of N-(n-butyl)thiophosphoric acid triamide (NBPT) and N-(n-propyl) thiophosphoric acid triamide (NPPT) are stabile over a period of one month open storage at 40° C at 50% relative humidity (rh).

In one preferred embodiment, at least 40 wt.-%, preferably at least 45 wt.-%, more preferably at least 50 wt.-%, and in particular at least 55 wt.-%, of the sum of N-(n-butyl)thiophosphoric acid triamide (NBPT) and N-(n-propyl) thiophosphoric acid triamide (NPPT) are stabile over a period of two montha open storage at 40 ° C at 50% relative humidity (rh).

The above outlined stabilities may e.g. be determined by dissolving 2 x 15 g in 100 mL water and analyze the sample using HPLC method DIN_EN_16651 using the mean value.

In one preferred embodiment, the urease inhibitor formulation (UI) has a cold stability of - 20 to-15 ° C, or of -15 to 15° C, or of -10 to 15 ° C, or of -5 to 15° C, or of 0 to 15° C, or of 5 to 15° C, or of 10 to 15° C. It is preferred that the urease inhibitor formulation (UI) has a cold stability of -20 to 0° C, or of -15 to 0 ° C, or of -10 to 0 ° C, or of -5 to 0° C. It is particularly preferred that the urease inhibitor formulation (UI) has a cold stability of -20 to -5 ° C, or of -15 to -5 ° C, or of -10 to -5 ° C.

As mentioned above, the invention further relates in a second aspect to a urease inhibitor formulation (UI) having a viscosity at a shear rate of $100 s^{-1}$ determined according to CIPAC method 192 (rotational rheometer) of at most 100 mPas at 20 ° C and at most 170 mPas at 10 ° C comprising

(A) 10 to 45 wt.-% of a mixture (A) comprises N-(n-butyl)thiophosphoric acid triamide (NBPT) and N-(n-propyl) thiophosphoric acid triamide (NPPT),

(B) 0 to 50 wt.-% of a polar aprotic solvent, preferably a carboxylic acid amide, more preferably N,N-dimethyl lactamide,

(C) 20 to 85 wt.-% of a solvent selected from the group consisting of glycol ether, glycerin ether, and mixtures thereof, and

(D) 3 to 25 wt.-% of at least one amine selected from the group consisting of

(D2) an amine containing not more than one amino group and at least three alkoxy- or hydroxy-substituted $C_2$ to $C_{12}$ alkyl groups $R^{21}$, wherein at least one of the groups $R^{21}$ is different to the other groups $R^{21}$,

(D3) an amine containing not more than one amino group and at least two alkoxy- or hydroxy-substituted $C_2$ to $C_{12}$ alkyl groups $R^{22}$, wherein at least one of the groups $R^{22}$ bears the alkoxy or hydroxy substituent at a secondary or tertiary carbon atom and wherein at least one of the groups $R^{22}$ is different to the other group(s) $R^{22}$,

(D4) an amine containing at least one saturated or unsaturated $C_8$ to $C_{40}$ alkyl group $R^{23}$, (D5) a saturated or unsaturated heterocyclic amine which contains at least one oxygen atom as ring atom and which does not contain a further alkoxy group, and

(D6) an amine selected from the group consisting of methyl-diethanolamine, methyl-diisopropanolamin, tetrahydroxy-propylethylenediamine, trimethylaminoethylethanolamine, N,N,N',N'-tetramethyl-1,6-hexanediamine, N, N' N"-tris(dimethylaminopropyl)hexahydrotriazine, and 2,2'-dimorpholinyldiethyl ether,

each based on the total amount of the urease inhibitor formulation (UI), wherein the inhibitor formulation (UI) is polymer free.

Further disclosed is a urease inhibitor formulation (UI) having a viscosity at a shear rate of $100 s^{-1}$ determined according to CIPAC method 192 (rotational rheometer) of at most 100 mPas at 20 ° C and at most 170 mPas at 10° C comprising

(A) 10 to 45 wt.-% of a mixture (A) comprises N-(n-butyl)thiophosphoric acid triamide (NBPT) and N-(n-propyl) thiophosphoric acid triamide (NPPT),

(B) 0 to 50 wt.-% of a polar aprotic solvent, preferably a carboxylic acid amide, more preferably N,N-dimethyl lactamide,

(C) 20 to 85 wt.-% of a solvent selected from the group consisting of glycol ether, glycerin ether, and mixtures thereof, and

(D) 3 to 25 wt.-% of at least one amine selected from the group consisting of

(D1) a polymeric polyamine,
(D2) an amine containing not more than one amino group and at least three alkoxy- or hydroxy-substituted $C_2$ to $C_{12}$ alkyl groups $R^{21}$, wherein at least one of the groups $R^{21}$ is different to the other groups $R^{21}$,
(D3) an amine containing not more than one amino group and at least two alkoxy- or hydroxy-substituted $C_2$ to $C_{12}$ alkyl groups $R^{22}$, wherein at least one of the groups $R^{22}$ bears the alkoxy or hydroxy substituent at a secondary or tertiary carbon atom and wherein at least one of the groups $R^{22}$ is different to the other group(s) $R^{22}$,
(D4) an amine containing at least one saturated or unsaturated $C_8$ to $C_{40}$ alkyl group $R^{23}$,
(D5) a saturated or unsaturated heterocyclic amine which contains at least one oxygen atom as ring atom and which does not contain a further alkoxy group, and
(D6) an amine selected from the group consisting of methyl-diethanolamine, methyl-diisopropanolamin, tetrahydroxy-propylethylenediamine, trimethylaminoethylethanolamine, N,N,N',N'-tetramethyl-1,6-hexanediamine, N, N' N"-tris(dimethylaminopropyl)hexahydrotriazine, and 2,2'-dimorpholinyldiethyl ether,
each based on the total amount of the urease inhibitor formulation (UI).

In this connection, the urease inhibitor formulation (UI) may comprises a polymeric amine such as polyalkyleneimine or polyvinylamine, preferably a polyalkyleneimine, more preferably a polyethyleneimine, polypropyleneimine, or polybutyleneimine.

It is particularly preferred that the polar aprotic solvent is N,N-dimethyl lactamide.

It is to be understood that all definitions and preferred embodiments as described above shall also hold for the specific urease inhibitor formulation (UI). Further preferred embodiments are described in detail herein after.

In a preferred embodiment, the urease inhibitor formulation (UI) has a viscosity at a shear rate of $100s^{-1}$ determined according to CIPAC method 192 (rotational rheometer) of at most 90 mPas, preferably at most 85 mPas, more preferably at most 80 mPas, even more preferably at most 75 mPas, and in particular at most 70 mPas, at 20° C and at most 160 mPas, preferably at most 155 mPas, more preferably at most 150 ° C, even more preferably at most 140, and in particular at most 135 mPas, at 10° C. It is further preferred that the urease inhibitor formulation (UI) has a viscosity at a shear rate of $100s^{-1}$ determined according to CIPAC method 192 (rotational rheometer) of 1 to 90 mPas, preferably 3 to 85 mPas, more preferably 5 to 80 mPas, even more preferably 8 to 75 mPas, and in particular 10 to 70 mPas, at 20° C and 5 to 160 mPas, preferably 8 to 155 mPas, more preferably 10 to 150° C, even more preferably 15 to 140, and in particular 20 to 135 mPas, at 10° C.

In a preferred embodiment, the urease inhibitor formulation (UI) has a viscosity at a shear rate of $100s^{-1}$ determined according to CIPAC method 192 (rotational rheometer) of 1 to 90 mPas, preferably of 5 to 85 mPas, most preferably of 10 to 80 mPas, and in particular of 12 to 75 mPas at 20 ° C, after a period of 14 days storage in closed bottles at 54 ° C.

In a preferred embodiment, the urease inhibitor formulation (UI) comprises

(A) 15 to 30 wt.-% of a mixture (A) comprises N-(n-butyl)thiophosphoric acid triamide (NBPT) and N-(n-propyl) thiophosphoric acid triamide (NPPT),
(B) 8 to 22 wt.-% of N,N-dimethyl lactamide,
(C) 40 to 70 wt.-% of a solvent selected from the group consisting of glycol ether, glycerin ether, and mixtures thereof, and
(D) 4 to 15 wt.-% of at least one amine selected from the group consisting of

(D2) an amine containing not more than one amino group and at least three alkoxy- or hydroxy-substituted $C_2$ to $C_{12}$ alkyl groups $R^{21}$, wherein at least one of the groups $R^{21}$ is different to the other groups $R^{21}$,
(D3) an amine containing not more than one amino group and at least two alkoxy- or hydroxy-substituted $C_2$ to $C_{12}$ alkyl groups $R^{22}$, wherein at least one of the groups $R^{22}$ bears the alkoxy or hydroxy substituent at a secondary or tertiary carbon atom and wherein at least one of the groups $R^{22}$ is different to the other group(s) $R^{22}$,
(D4) an amine containing at least one saturated or unsaturated $C_8$ to $C_{40}$ alkyl group $R^{23}$,
(D5) a saturated or unsaturated heterocyclic amine which contains at least one oxygen atom as ring atom and which does not contain a further alkoxy group, and
(D6) an amine selected from the group consisting of methyl-diethanolamine, methyl-diisopropanolamin, tetrahydroxy-propylethylenediamine, trimethylaminoethylethanolamine, N,N,N',N'-tetramethyl-1,6-hexanediamine, N, N' N"-tris(dimethylaminopropyl)hexahydrotriazine, and 2,2'-dimorpholinyldiethyl ether,
each based on the total amount of the urease inhibitor formulation (UI).

In a particular preferred embodiment, the urease inhibitor formulation (UI) comprises (A) 20 to 30 wt.-%, more preferably 22 to 28 wt.-%, of the sum of N-(n-butyl)thiophosphoric acid triamide (NBPT) and N-(n-propyl)thiophosphoric acid triamide (NPPT), based on the total amount of the urease inhibitor formulation (UI).

In a preferred embodiment, the solvent is a glycol ether, preferably selected from the group consisting of diethylene glycol, dipropylene glycol, triethylene glycol, di-ethyleneglycol monobutylether, triethyleneglycol-n-butylether, and mixtures thereof, more preferably selected from the group consisting of diethylene glycol, dipropylene glycol, and mixtures thereof, and in particular diethylene glycol.

In a preferred embodiment, the solvent has a flashpoint (determined according to ISO 2719:2016) of more than 130° C, preferably more than 135° C, and in particular more than 140° C.

In one preferred embodiment, the urease inhibitor formulation (UI) has a cold stability of - 20 to 15° C, or of -15 to 15° C, or of -10 to 15° C, or of -5 to 15° C, or of 0 to 15° C, or of 5 to 15° C, or of 10 to 15° C. It is preferred that the urease inhibitor formulation (UI) has a cold stability of -20 to 0° C, or of -15 to 0° C, or of -10 to 0° C, or of -5 to 0° C. It is particularly preferred that the urease inhibitor formulation (UI) has a cold stability of -20 to -5 ° C, or of -15 to -5° C, or of -10 to -5 ° C.

In one preferred embodiment, at least 80 wt.-%, preferably at least 85 wt.-%, more preferably at least 90 wt.-%, even more preferably at least 95 wt.-%, and in particular at least 97 wt.-% of the N-(n-butyl)thiophosphoric acid triamide (NBPT) and N-(n-propyl)thiophosphoric acid triamide (NPPT) are stable in the urease inhibitor formulation (UI) over a period of 14 days storage in closed bottles at 54 ° C. Preferably, up to 99.5 wt.-% of the N-(n-butyl)thiophosphoric acid triamide (NBPT) and N-(n-propyl)thiophosphoric acid triamide (NPPT) are stable in the urease inhibitor formulation (UI) over a period of 14 days storage in closed bottles at 54 ° C.

In a preferred embodiment, the urease inhibitor formulation (UI) does not comprise dimethyl sulfoxide.

In a preferred embodiment, the urease inhibitor formulation (UI) does not comprise 1,2-propylene glycol.

The herewith disclosed urease inhibitor formulation (UI) is particularly suitable for applying to or on a urea-containing fertilizer (F1). Such a urea-containing fertilizer (F1) may be selected from the group consisting of urea, urea ammonium nitrate (UAN), isobutylidene diurea (IBDU), crotonylidene diurea (CDU) and urea formaldehyde (UF), urea-acetaldehyde, and urea-glyoxal condensates, preferably wherein the urea-containing fertilizer (F1) is urea.

As mentioned above, the invention further relates in a third aspect to a fertilizer composition (1) comprising a urea-containing fertilizer (F1) and mixture (M) comprising

(A) a mixture (A) comprising at least one (thio)phosphoric acid triamide;
(B) N,N-dimethyl lactamide; and
(C) a solvent selected from the group consisting of glycol ether, glycerin ether, and mixtures thereof, wherein the mixture (M) is polymer free.

In a preferred embodiment, the fertilizer composition (1) is polymer free.

Further disclosed is a fertilizer composition (1) comprising a urea-containing fertilizer (F1) and mixture (M) comprising

(A) a mixture (A) comprising at least one (thio)phosphoric acid triamide;
(B) N,N-dimethyl lactamide; and
(C) a solvent selected from the group consisting of glycol ether, glycerin ether, and mixtures thereof.

In this connection, mixture (M) may comprise a polymeric amine such as polyalkyleneimine or polyvinylamine, preferably a polyalkyleneimine, more preferably a polyethyleneimine, polypropyleneimine, or polybutyleneimine.

It is to be understood that all definitions and preferred embodiments as described above shall also hold for the specific fertilizer composition (1). Further preferred embodiments are described in detail herein after.

In a preferred embodiment, the mixture (A) comprises at least one (thio)phosphoric acid triamide according to general formula (I)

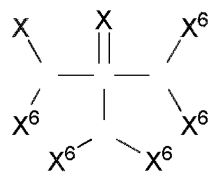
(I)

wherein

$X^1$ is O or S;
$R^1$ is $C_1$-$C_{20}$-alkyl, $C_3$-$_{20}$-cycloalkyl, $C_6$-$C_{20}$-aryl, $C_6$-$C_{20}$-aryl-$C_1$-$C_4$-alkyl, or $C_1$-$C_6$-(di)alkylaminocarbonyl;
$R^2$ is H, $C_1$-$C_{20}$-alkyl, $C_3$-$_{20}$-cycloalkyl, $C_6$-$C_{20}$-aryl, $C_6$-$C_{20}$-aryl-$C_1$-$C_4$-alkyl, or $C_1$-$C_6$-(di)alkylaminocarbonyl; or

$R^1$ and $R^2$ together with the nitrogen atom linking them define a 5- or 6-membered saturated or unsaturated heterocyclic radical, which optionally comprises 1 or 2 further heteroatoms selected from the group consisting of N, O, and S; and

$R^3$, $R^4$, $R^5$, and $R^6$ are independently of each other selected from the group consisting of H and $C_1$-$C_4$-alkyl.

In a preferred embodiment, the mixture (A) comprises at least two (thio)phosphoric acid triamides, preferably having the general formula (I) as above-outlined. In this connection, it is to be understood that the at least two (thio) phosphoric acid triamides are structurally different, e.g. have at least one different moiety according to general formula (I) as above-outlined.

In a preferred embodiment, the mixture (A) comprises at least N-(n-propyl)thiophosphoric acid triamide (NPPT).

In a preferred embodiment, the mixture (A) comprises at least N-(n-butyl)thiophosphoric acid triamide (NBPT).

In a preferred embodiment, the mixture (A) comprises N-(n-butyl)thiophosphoric acid triamide (NBPT) and/or N-(n-propyl)thiophosphoric acid triamide (NPPT), and in particular the mixture (A) comprises N-(n-butyl)thiophosphoric acid triamide (NBPT) and N-(n-propyl)thiophosphoric acid triamide (NPPT).

In a preferred embodiment, the solvent is a glycol ether, preferably selected from the group consisting of diethylene glycol, dipropylene glycol, triethylene glycol, di-ethyleneglycol monobutylether, triethyleneglycol-n-butylether, and mixtures thereof, more preferably selected from the group consisting of diethylene glycol, dipropylene glycol, and mixtures thereof, and in particular diethylene glycol.

In a preferred embodiment, the solvent has a flashpoint (determined according to ISO 2719:2016) of more than 130° C, preferably more than 135° C, and in particular more than 140° C.

In a preferred embodiment, the mixture (M) further comprises

(D) at least one amine selected from the group consisting of

(D2) an amine containing not more than one amino group and at least three alkoxy- or hydroxy-substituted $C_2$ to $C_{12}$ alkyl groups $R^{21}$, wherein at least one of the groups $R^{21}$ is different to the other groups $R^{21}$,

(D3) an amine containing not more than one amino group and at least two alkoxy- or hydroxy-substituted $C_2$ to $C_{12}$ alkyl groups $R^{22}$, wherein at least one of the groups $R^{22}$ bears the alkoxy or hydroxy substituent at a secondary or tertiary carbon atom and wherein at least one of the groups $R^{22}$ is different to the other group(s) $R^{22}$,

(D4) an amine containing at least one saturated or unsaturated $C_8$ to $C_{40}$ alkyl group $R^{23}$,

(D5) a saturated or unsaturated heterocyclic amine which contains at least one oxygen atom as ring atom and which does not contain a further alkoxy group, and

(D6) an amine selected from the group consisting of methyl-diethanolamine, methyl-diisopropanolamin, tetrahydroxy-propylethylenediamine, trimethylaminoethylethanolamine, N,N,N',N'-tetramethyl-1,6-hexanediamine, N, N' N"-tris(dimethylaminopropyl)hexahydrotriazine, and 2,2'-dimorpholinyldiethyl ether, preferably wherein the at least one amine is selected from the group consisting of

(D2) an amine containing not more than one amino group and at least three hydroxy-substituted $C_2$ to $C_8$, preferably $C_2$ to $C_5$, more preferably $C_2$ to $C_3$ alkyl groups $R^{21}$, wherein at least one of the groups $R^{21}$ is different to the other groups $R^{21}$,

(D3) an amine containing not more than one amino group and at least two alkoxy- or hydroxy-substituted $C_2$ to $C_8$, preferably $C_2$ to $C_5$, more preferably $C_2$ to $C_3$ alkyl groups $R^{22}$, wherein at least one of the groups $R^{22}$ bears the alkoxy or hydroxy substituent at a secondary or tertiary carbon atom and wherein at least one of the groups $R^{22}$ is different to the other group(s) $R^{22}$,

(D6) an amine selected from the group consisting of methyl-diethanolamine, methyldiisopropanolamin, and N, N',N"-tris(dimethylaminopropyl)hexahydrotriazine,

more preferably wherein the at least one amine amine is methyl-diethanolamine (MDEOA), methyl- diisopropanolamin (MDIPOA), methyl-ethanol-isopropanolamin (MEIPOA), N, N',N"-tris(dimethylaminopropyl)hexahydrotriazine (NNN), 1,1 '-((2-Hydroxyethyl)imino)dipropan-2-ol (EDIPOA) or bis(hydroxyethyl)-isopropanolamine (DEIPA), and in particular bis(hydroxyethyl)-isopropanolamine (DEIPA).

In a preferred embodiment, the mixture (M) is coated onto the urea-containing fertilizer (F1).

In a preferred embodiment, the urea-containing fertilizer (F1) comprises at least one component selected from the group consisting of urea, urea ammonium nitrate (UAN), isobutylidene diurea (IBDU), crotonylidene diurea (CDU) and urea formaldehyde (UF), urea-acetaldehyde, and urea-glyoxal condensates, preferably wherein the urea-containing fertilizer (F1) is urea.

In one preferred embodiment, at least 40 wt.-%, preferably at least 45 wt.-%, more preferably at least 50 wt.-%, and in particular at least 55 wt.-%, of the at least one (thio)phosphoric acid triamide are stabile over a period of one month open storage at 40° C at 50% relative humidity (rh).

In one preferred embodiment, at least 40 wt.-%, preferably at least 45 wt.-%, more preferably at least 50 wt.-%,

and in particular at least 55 wt.-%, of the at least one (thio)phosphoric acid triamide are stabile over a period of two months open storage at 40° C at 50% relative humidity (rh).

In one preferred embodiment, at least 40 wt.-%, preferably at least 45 wt.-%, more preferably at least 50 wt.-%, and in particular at least 55 wt.-%, of the sum of N-(n-butyl)thiophosphoric acid triamide (NBPT) and N-(n-propyl) thiophosphoric acid triamide (NPPT) are stabile over a period of one month open storage at 40 ° C at 50% relative humidity (rh).

In one preferred embodiment, at least 40 wt.-%, preferably at least 45 wt.-%, more preferably at least 50 wt.-%, and in particular at least 55 wt.-%, of the sum of N-(n-butyl)thiophosphoric acid triamide (NBPT) and N-(n-propyl) thiophosphoric acid triamide (NPPT) are stabile over a period of two months open storage at 40° C at 50% relative humidity (rh).

The above outlined stabilities may e.g. be determined by dissolving 2 x 15 g in 100 mL water and analyze the sample using HPLC method DIN_EN_16651 using the mean value.

The present invention is further illustrated by the following examples.

## Examples

Materials

| Material | Chemical name | CAS | Flashpoint (° C) |
|---|---|---|---|
| Piagran 46 | Urea | | - |
| NBPT | n-butylthiophosphoric triamide | | - |
| NPPT | n-propylthiophosphoric triamide | | - |
| DEG | Diehtylene glycol | | 142 |
| DMSO | Dimehtyl sulfoxide | | 95 |
| PG | 1,2-Propylene glycol | | 99 |
| PEI | Polyethyleneimine, ca. 800 g/mol | 9002-98-6 | 180 |
| DEIPA | 1-[Bis-(2-hydroxyethyl)-amino]-2-propanol | 6712-98-7 | 191 |
| DML | N,N-Dimethyl lactamide | | 103 |
| NNN | N, N',N"-tris(dimethylaminopropyl)hexahydrotriazine | 15875-13-5 | - |
| TEOA | Triethanolamine | 102-71-6 | - |
| TIPOA | Triisopropanolamine | 122-20-3 | - |
| MDEOA | Methyl-diethanolamin | 105-59-9 | - |
| MDIPOA | Methyl-diisopropanolamin | 4402-30-6 | - |
| EDIPOA | 1,1'-[(2-hydroxyethyl)imino]dipropan-2-ol | 10353-86-3 | - |
| MEIPOA | Methyl-ethanol-isopropanolamin | 16681-45-1 | - |

For the below examples and the below tables, the following abbreviations have been used:

% = percent by weight (wt. %)
B = polar, aprotic solvent
C = alcohol, polyol, polyether glycol solvent
D = amine
E = colorant
conc = concentration (e.g. amount) of NxPT in percent by weight based on the total weight of the urea fertilizer on which the composition was coated
visc i = initial viscosity in mPas
pH i = initial pH
delta pH = pH change after 2 weeks storage at 54° C

Temp c = lowest temperature that does not lead to crystallization or freezing after 1 week storage + 1 week storage after adding a seed crystal (° C)

NxPT h = Content (Percent by weight) of NxPT after heat stability test (2 weeks at 54° C in closed bottles)

**Preparation of the formulations**

According to the ratios and components as specified, all components were mixed, and the resulting mixture was stirred until complete dissolution of the solid and analyzed for the content of NBPT, NPPT, NxPT (by HPLC) and the viscosity. The formulations can be also prepared by mixing at first one or more different premixes of two or more components and combining them with the rest of the components. Mixing at elevated temperature (e.g. 40 ° C) accelerates the dissolution.

Viscosity was measured according to CIPAC method 192 (rotational rheometer) with the undiluted formulation on a cone-plate rotational rheometer AR 2000ex (TA Instruments) at shear rate of $100s^{-1}$ at 20 ° C or 10° C (see indication on column header of examples).

**Formulation storage stability**

The mixture of each example was stored in closed bottles for 14 days at 54 ° C (referred to as heat stability test in the following) and then analyzed for the content of NxPT. The mixture of each example was also stored in closed bottles for 14 days at 5° C and then analyzed for the content of NxPT. The storage stability in % was calculated as difference between the content in the heat stability test and the content in the 5° C sample.

For the cold stability test, samples were kept at room temperature (20° C), 10° C, 5 ° C, 0° C, -5° C, -10° C, -15° C and -20° C for one week. After addition of a seed crystal of NxPT, the samples were kept for one more week at the respective temperature. The coldest temperature that did not result in either crystallization or freezing was recorded.

All examples of the inventions are liquid, clear compositions with a yellow colourant. The same advantageous properties like enhanced cold stability, low odor and significantly improved storage stability of NxPT after coating on nitrogen containing fertilizer, apply to corresponding liquid compositions without colourant.

**Treatment of urea granules and storage stability on urea**

3 kg of urea granules were added to an ERWEKA mixer (dimensions mix drum: 50 cm diameter, 20 cm high). The mixer was turned on (27 RPM) and the amount of urease inhibitor formulation needed to reach an active ingredient concentration on urea of 0.054 wt% (0.0135 wt% NPPT + 0.0405 wt% NBPT) was sprayed onto the urea using a syringe. Afterwards, the urea/inhibitor mixture was mixed for 3 minutes. The inhibitor treated urea granules were filled in 100 mL polyethylene bottles (50 g per bottle) and the bottles were stored open at 40° C and 50% relative humidity. After 1 month storage time, samples were taken and analyzed for active ingredient concentration. From each sample 2 x 15 g was dissolved in 100 mL water and analyzed using HPLC method DIN_EN_16651. The resulting NxPT concentrations from both measurements were averaged. Recovery was calculated from initial value versus a measurement from storage stability samples.

**Example 1:** NxPT formulations in different solvents on urea granules:

Formulations of NBPT and NPPT were prepared by mixing the following components:

F1: 6.25% NBPT, 18.25% NBPT, 74% DEG, 1% yellow colorant

F2: 6.25% NBPT, 18.25% NBPT, 74% PG, 1% yellow colorant

The following commercial urease inhibitor formulations were used:

F3: Agrotain Ultra: NBPT (15-40%), PG (40-70%), NMP (10-30%), non-hazardous dye (1-5%).

F4: Agrotain Advance: NBPT (15-40%), PG (30-60%), TIGMBE (15-40%) and DEGMBE (1-5%), non-hazardous ingredients (7-13%).

Urea granules were treated with the formulations as described in the methods section above. Analysis of stored samples was done after one month storage.

The results in Figure 1 surprisingly show that the solvents used in the urease inhibitor formulations F1 to F4 have an influence on the stability of NxPT during storage of the treated urea. Among the tested glycols, diethylene glycol (DEG) proved to have the best stabilizing properties.

**Example 2:** solvent mixtures for excellent cold stability

Formulations of NBPT and NPPT were prepared according to recipes listed in Table 1. Samples of each formulation were characterized with viscosity, pH, heat stability and cold stability tests, according to the methods described above. The results of these tests are also documented in Table 1.

**Table 1: formulation details and results of F5 to F25**

| Form | NBPT pure | NPPT pure | conc NxPT | B | conc B | C | conc C | D | conc D | conc E | visc i, 20°C | pH i | NxPT h | Temp c |
|---|---|---|---|---|---|---|---|---|---|---|---|---|---|---|
| F5 | 37,50% | 12,50% | 50% | DML | 20,00% | DEG | 22,75% | PEI | 6,25% | 1,00% | 165 | 10,3 | 97,53% | 20 |
| F6 | 33,75% | 11,25% | 45% | DML | 20,00% | DEG | 27,75% | PEI | 6,25% | 1,00% | 147 | 10,3 | 98,76% | 20 |
| F7 | 30,00% | 10,00% | 40% | DML | 20,00% | DEG | 32,75% | PEI | 6,25% | 1,00% | 131 | 10,3 | 99,14% | 10 |
| F8 | 26,25% | 8,75% | 35% | DML | 20,00% | DEG | 37,75% | PEI | 6,25% | 1,00% | 119 | 10,3 | 99,71% | 5 |
| F9 | 18,75% | 6,25% | 25% | DML | 20,00% | DEG | 47,75% | PEI | 6,25% | 1,00% | 96 | 10,3 | 99,32% | -10 |
| F10 | 22,50% | 7,50% | 30% | DML | 20,00% | PG | 42,75% | PEI | 6,25% | 1,00% | 96 | 10,3 | 99,40% | 5 |
| F11 | 26,25% | 8,75% | 35% | DML | 20,00% | PG | 37,75% | PEI | 6,25% | 1,00% | 102 | 10,3 | 94,12% | 10 |
| F12 | 30,00% | 10,00% | 40% | DML | 20,00% | PG | 32,75% | PEI | 6,25% | 1,00% | 115 | 10,3 | 99,28% | 20 |
| F13 | 33,75% | 11,25% | 45% | DML | 20,00% | PG | 27,75% | PEI | 6,25% | 1,00% | 125 | 10,3 | 98,78% | 20 |
| F14 | 37,50% | 12,50% | 50% | DML | 20,00% | PG | 22,75% | PEI | 6,25% | 1,00% | 141 | 10,3 | 99,11% | 20 |
| F15 | 37,50% | 12,50% | 50% | DML | 20,00% | DEG | 22,75% | DEIPA | 6,25% | 1,00% | 104 | 9 | 97,13% | 20 |
| F16 | 33,75% | 11,25% | 45% | DML | 20,00% | DEG | 27,75% | DEIPA | 6,25% | 1,00% | 91 | 8,9 | 98,20% | 20 |
| F17 | 30,00% | 10,00% | 40% | DML | 20,00% | DEG | 32,75% | DEIPA | 6,25% | 1,00% | 82 | 8,9 | 98,02% | 10 |
| F18 | 26,25% | 8,75% | 35% | DML | 20,00% | DEG | 37,75% | DEIPA | 6,25% | 1,00% | 74 | 8,9 | 93,96% | 5 |
| F19 | 22,50% | 7,50% | 30% | DML | 20,00% | DEG | 42,75% | DEIPA | 6,25% | 1,00% | 69 | 9 | 97,47% | -5 |
| F20 | 18,75% | 6,25% | 25% | DML | 20,00% | DEG | 47,75% | DEIPA | 6,25% | 1,00% | 60 | 8,9 | 97,41% | -10 |
| F21 | 22,50% | 7,50% | 30% | DML | 20,00% | PG | 42,75% | DEIPA | 6,25% | 1,00% | 58 | 9 | 97,00% | 5 |
| F22 | 26,25% | 8,75% | 35% | DML | 20,00% | PG | 37,75% | DEIPA | 6,25% | 1,00% | 64 | 9 | 97,57% | 10 |
| F23 | 30,00% | 10,00% | 40% | DML | 20,00% | PG | 32,75% | DEIPA | 6,25% | 1,00% | 71 | 9 | 97,29% | 20 |
| F24 | 33,75% | 11,25% | 45% | DML | 20,00% | PG | 27,75% | DEIPA | 6,25% | 1,00% | 78 | 9 | 97,51% | 20 |
| F25 | 37,50% | 12,50% | 50% | DML | 20,00% | PG | 22,75% | DEIPA | 6,25% | 1,00% | 86 | 9 | 97,39% | 20 |

All recipes tested had a good performance concerning viscosity, pH, and active ingredient stability during the high temperature test. However, with respect to formulation performance in the cold temperature test, surprisingly DML + DEG was significantly better than DML + PG at a total active ingredient concentration NxPT of up to 40%.

Moreover, the cold temperature stability is plotted in different graphs (Figures 2a and 2b) for two amines exemplarily tested for a monomeric amine (DEIPA) and a polymeric amine (PEI), respectively. The graphs show a very similar pattern independent of the amine molecular weight. The influence of the chemistry of the amine stabilizer D has been further investigated in Example 3.

**Example 3:** Formulation performance independent of Amine chemistry

Formulations based on the solvent system DML + DEG with different alcohol-amines have been prepared according to the procedure given above according to the recipes displayed in Table 2. The respective results are given in Table 3.

Table 2: Formulation details of F9, F20, and F26 to F30

| Form | NBPT pure | NPPT pure | conc NxPT | B | conc B | C | conc C | D | conc D | conc E |
|---|---|---|---|---|---|---|---|---|---|---|
| F20 | 18,75% | 6,25% | 25% | DML | 20,00% | DEG | 47,75% | DEIPA | 6,25% | 1,00% |
| F26 | 18,75% | 6,25% | 25% | DML | 20,00% | DEG | 47,75% | EDIPOA | 6,25% | 1,00% |
| F27 | 18,75% | 6,25% | 25% | DML | 20,00% | DEG | 47,75% | MDEOA | 6,25% | 1,00% |
| F28 | 18,75% | 6,25% | 25% | DML | 20,00% | DEG | 47,75% | MDIPOA | 6,25% | 1,00% |
| F29 | 18,75% | 6,25% | 25% | DML | 20,00% | DEG | 47,75% | MEIPOA | 6,25% | 1,00% |
| F30 | 18,75% | 6,25% | 25% | DML | 20,00% | DEG | 47,75% | NNN | 6,25% | 1,00% |
| F9 | 18,75% | 6,25% | 25% | DML | 20,00% | DEG | 47,75% | PEI | 6,25% | 1,00% |

Table 3: Results of F9, F20, and F26 to F30

| Form | D | conc D | visc i, 20 °C | pH i | NxPT h | Temp c |
|---|---|---|---|---|---|---|
| F20 | DEIPA | 6,25% | 60 | 8,9 | 97,41% | -10 |
| F26 | EDIPOA | 6,25% | 62 | 9 | 97,48% | -10 |
| F27 | MDEOA | 6,25% | 54 | 9,6 | 96,48% | -10 |
| F28 | MDIPOA | 6,25% | 54 | 9,8 | 97,69% | -10 |
| F29 | MEIPOA | 6,25% | 52 | 9,7 | 98,05% | -15 |
| F30 | NNN | 6,25% | 70 | 11,2 | 94,08% | -10 |
| F9 | PEI | 6,25% | 96 | 10,3 | 99,32% | -10 |

The results of viscosity, pH, active ingredient stability and cold temperature test show that the resulting performance is independent of the detailed chemistry of the selected amines. They all perform equally well.

**Example 4:** Solvent, co-solvent and amine combinations for optimum formulation performance

Based on a design of experiment, a recipe optimization with respect to formulation performance has been carried out for the example system DML + DEG with DEIPA.

Table 4: Formulation details and results of F31 to F47, wherein B is DML, C is DEG, and D is DEIPA and wherein 1.00% of colorant E is present.

| Form | NBPT pure [%] | NPPT pure [%] | conc NxPT [%] | conc B [%] | conc C [%] | conc D [%] | visc i, 20 ° C | pH i | visc i, 10 ° C | delta pH | NxPT h [%] | Temp c |
|---|---|---|---|---|---|---|---|---|---|---|---|---|
| F31 | 11,25 | 3,75 | 15 | 0,00 | 84,00 | 0,00 | 49 | 6,9 | 96 | 1,0 | 98,44 | -20 |
| F32 | 11,25 | 3,75 | 15 | 0,00 | 71,50 | 12,50 | 70 | 9,3 | 140 | 0,0 | 97,34 | -20 |

(continued)

| Form | NBPT pure [%] | NPPT pure [%] | conc NxPT [%] | conc B [%] | conc C [%] | conc D [%] | visc i, 20 ° C | pH i | visc i, 10 ° C | delta pH | NxPT h [%] | Temp c |
|---|---|---|---|---|---|---|---|---|---|---|---|---|
| F33 | 11,25 | 3,75 | 15 | 20,00 | 64,00 | 0,00 | 41 | 6,9 | 77 | 2,3 | 97,45 | -20 |
| F34 | 11,25 | 3,75 | 15 | 20,00 | 51,50 | 12,50 | 57 | 9 | 115 | 0,2 | 97,60 | -20 |
| F35 | 11,25 | 3,75 | 15 | 10,00 | 67,75 | 6,25 | 53 | 9 | 105 | 0,1 | 98,01 | -20 |
| F36 | 15,00 | 5,00 | 20 | 10,00 | 69,00 | 0,00 | 49 | 6,8 | 96 | 1,6 | 97,67 | -20 |
| F37 | 15,00 | 5,00 | 20 | 10,00 | 56,50 | 12,50 | 69 | 9,2 | 139 | 0,1 | 98,88 | -20 |
| F38 | 15,00 | 5,00 | 20 | 0,00 | 72,75 | 6,25 | 66 | 9 | 130 | 0,1 | 98,43 | -20 |
| F39 | 15,00 | 5,00 | 20 | 20,00 | 52,75 | 6,25 | 54 | 8,9 | 103 | 0,1 | 96,36 | -20 |
| F40 | 15,00 | 5,00 | 20 | 10,00 | 62,75 | 6,25 | 62 | 8,9 | 112 | 0,2 | 97,71 | -20 |
| F41 | 15,00 | 5,00 | 20 | 10,00 | 62,75 | 6,25 | 60 | 8,9 | 113 | 0,2 | 97,09 | -20 |
| F42 | 15,00 | 5,00 | 20 | 10,00 | 62,75 | 6,25 | 62 | 8,9 | 115 | 0,2 | 97,42 | -20 |
| F43 | 18,75 | 6,25 | 25 | 0,00 | 74,00 | 0,00 | 60 | 6,9 | 114 | 1,4 | 99,29 | -5 |
| F44 | 18,75 | 6,25 | 25 | 0,00 | 61,50 | 12,50 | 85 | 9,2 | 169 | 0,1 | 98,78 | 0 |
| F45 | 18,75 | 6,25 | 25 | 20,00 | 54,00 | 0,00 | 50 | 6,9 | 95 | 1,8 | 97,95 | -20 |
| F46 | 18,75 | 6,25 | 25 | 20,00 | 41,50 | 12,50 | 71 | 9,1 | 153 | 0,1 | 98,20 | -10 |
| F47 | 18,75 | 6,25 | 25 | 10,00 | 57,75 | 6,25 | 65 | 8,9 | 127 | 0,1 | 98,38 | -10 |

Recipes F31, F33, F36, F43 and F45 display a high delta pH during storage of 2W54 ° C, of more than 0.8. They do not contain any stabilizer D. On the other hand all stabilizer D containing formulation recipes lead to excellent delta pH below 0.3. Thus, the stabilizer D is an essential recipe component to achieve good pH stability. Formulations F32, F34, F35, F37, F38, F39, F40, F41 and F42 display a good active ingredient stability (NxPT h> 95%) as well as a low delta pH. Furthermore, these recipes are low viscous (below 80 mPas at 20 ° C and below 150 mPas at 10° C) and show excellent cold stability of -20° C. However, F32 to F41 only have a concentration of maximally 15% NxPT. Recipe numbers F46 and F47 with 25% active ingredient content have a stable active ingredient content (>95%) and a pH change less than 0.3 after 2 weeks storage at 54° C. Furthermore, it displays a low viscosity of less than 80 mPas at 20° C and show good cold stability of -10° C. F46 has a viscosity above 150 mPas at 10° C while F47 viscosity still lies in the acceptable range below 150 mPas. Thus, a lower stabilizer D content and a higher solvent C content are of advantage.

**Example 5:** Urea granules treated with formulations of NxPT in DEG with co-solvent and amine stabilizer, active ingredient stability on granules

The formulations were manufactured in accordance with the above-outlined methods and Table 5. As can be seen from Figure 3, the best recovery of NxPT can be obtained when the formulation comprises DEG, DEIPA, and DML (Agnique AMD 3 L).

Table 5: Formulation details of F5 to F9

| | Formulation composition (wt%) | | | | | | | | |
|---|---|---|---|---|---|---|---|---|---|
| Form | NPPT | NBPT | PG | DMSO | PEI | DEIPA | Agnique AMD 3 L | Colorant | DEG |
| F43 | 6.25 | 18.75 | | | | | | 1 | 74 |
| F48 | 6.25 | 18.75 | 47.75 | 20 | 6.25 | | | 1 | |
| F49 | 6.25 | 18.75 | | | | 4 | 10 | 1 | 60 |
| F47 | 6.25 | 18.75 | | | | 6.25 | 10 | 1 | 57.75 |
| F50 | 6.25 | 18.75 | | | | 8 | 10 | 1 | 56 |

## Claims

1. Use of a solvent (C) selected from the group consisting of glycol ether, glycerin ether, and mixtures thereof for stabilizing at least one (thio)phosphoric acid triamide in a fertilizer composition (1) comprising a urea-containing fertilizer (F1) and a urease inhibitor formulation (UI) comprising a mixture (A) comprising the at least one (thio) phosphoric acid triamide and the solvent (C), wherein the inhibitor formulation (UI) is polymer free, and wherein the urease inhibitor formulation (UI) further comprises (D) at least one amine selected from the group consisting of

    (D2) an amine containing not more than one amino group and at least three alkoxy- or hydroxy-substituted $C_2$ to $C_{12}$ alkyl groups $R^{21}$, wherein at least one of the groups $R^{21}$ is different to the other groups $R^{21}$,
    (D3) an amine containing not more than one amino group and at least two alkoxy- or hydroxy-substituted $C_2$ to $C_{12}$ alkyl groups $R^{22}$, wherein at least one of the groups $R^{22}$ bears the alkoxy or hydroxy substituent at a secondary or tertiary carbon atom and wherein at least one of the groups $R^{22}$ is different to the other group(s) $R^{22}$,
    (D4) an amine containing at least one saturated or unsaturated $C_8$ to $C_{40}$ alkyl group $R^{23}$,
    (D5) a saturated or unsaturated heterocyclic amine which contains at least one oxygen atom as ring atom and which does not contain a further alkoxy group, and
    (D6) an amine selected from the group consisting of methyl-diethanolamine, methyl-diisopropanolamin, tetrahydroxy-propylethylenediamine, trimethylaminoethylethanolamine, N,N,N',N'-tetramethyl-1,6-hexanediamine, N, N' ,N "-tris(dimethylaminopropyl)hexahydrotriazine, and 2,2'-dimorpholinyldiethyl ether.

2. The use according to claim 1,

    wherein the urease inhibitor formulation (UI) further comprises
    (B) a polar aprotic solvent, preferably a carboxylic acid amide, more preferably N,N-dimethyl lactamide, preferably wherein the polar aprotic solvent improves the cold stability of the urease inhibitor formulation (UI).

3. The use according to claim 1 or 2,
   wherein the urease inhibitor formulation (UI) is coated onto the urea-containing fertilizer (F1).

4. The use according to any one of claims 1 to 3,

    wherein the solvent (C) is selected from the group consisting of diethylene glycol, dipropylene glycol, triethylene glycol, di-ethyleneglycol monobutylether, triethyleneglycol-n-butylether, and mixtures thereof, in particular diethylene glycol and/or
    wherein the solvent (C) has a flashpoint (determined according to ISO 2719:2016) of more than 130 °C, preferably more than 135 °C, and in particular more than 140 °C.

5. The use according to any one of claims 1 to 4,

    wherein the mixture (A) comprises at least one (thio)phosphoric acid triamide according to general formula (I)

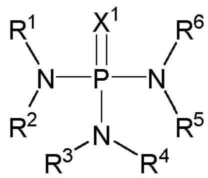 (I)

    wherein

        $X^1$ is O or S;
        $R^1$ is $C_1$-$C_{20}$-alkyl, $C_3C_{20}$-cycloalkyl, $C_6$-$C_{20}$-aryl, $C_6$-$C_{20}$-aryl-$C_1$-$C_4$-alkyl, or $C_1$-$C_6$-(di)alkylaminocarbonyl;
        $R^2$ is H, $C_1$-$C_{20}$-alkyl, $C_3C_{20}$-cycloalkyl, $C_6$-$C_{20}$-aryl, $C_6$-$C_{20}$-aryl-$C_1$-$C_4$-alkyl, or $C_1$-$C_6$-(di)alkylaminocarbonyl; or
        $R^1$ and $R^2$ together with the nitrogen atom linking them define a 5- or 6-membered saturated or unsaturated heterocyclic radical, which optionally comprises 1 or 2 further heteroatoms selected from the group consisting of N, O, and S; and

$R^3$, $R^4$, $R^5$, and $R^6$ are independently of each other selected from the group consisting of H and $C_1$-$C_4$-alkyl; preferably
wherein the mixture (A) comprises N-(n-butyl)thiophosphoric acid triamide (NBPT) and/or N-(n-propyl)thiophosphoric acid triamide (NPPT), in particular wherein the mixture (A) comprises N-(n-butyl)thiophosphoric acid triamide (NBPT) and N-(n-propyl)thiophosphoric acid triamide (NPPT) and/or
wherein the at least one (thio)phosphoric acid triamide is comprised in the urease inhibitor formulation (UI) in an amount of 5 to less than 45 wt.-%, preferably of 10 to 42 wt.-%, and in particular of 15 to 40 wt.-%, based on the total amount of the urease inhibitor formulation (UI).

**6.** The use according to any one of claims 1 to 5,

wherein the at least one amine is selected from the group consisting of

(D2) an amine containing not more than one amino group and at least three hydroxy-substituted $C_2$ to $C_8$, preferably $C_2$ to $C_5$, more preferably $C_2$ to $C_3$ alkyl groups $R^{21}$, wherein at least one of the groups $R^{21}$ is different to the other groups $R^{21}$,
(D3) an amine containing not more than one amino group and at least two alkoxy- or hydroxy-substituted $C_2$ to $C_8$, preferably $C_2$ to $C_5$, more preferably $C_2$ to $C_3$ alkyl groups $R^{22}$, wherein at least one of the groups $R^{22}$ bears the alkoxy or hydroxy substituent at a secondary or tertiary carbon atom and wherein at least one of the groups $R^{22}$ is different to the other group(s) $R^{22}$, (D6) an amine selected from the group consisting of methyl-diethanolamine, methyl-diisopropanolamin, and N, N',N"-tris(dimethylaminopropyl)hexahydrotriazine,

in particular wherein the at least one amine is methyl-diethanolamine (MDEOA), methyl-diisopropanolamin (MDIPOA), methyl-ethanol-isopropanolamin (MEIPOA), N, N',N''-tris(dimethylaminopropyl)hexahydrotriazine (NNN), 1,1'-((2-Hydroxyethyl)imino)dipropan-2-ol (EDIPOA) or bis(hydroxyethyl)-isopropanolamine (DEIPA).

**7.** The use according to any one of claims 1 to 6,
wherein at least 85 wt.-%, preferably at least 90 wt.-%, more preferably at least 95 wt.-%, and in particular at least 97 wt.-%, of the at least one (thio)phosphoric acid triamide comprised in the urease inhibitor formulation (UI) are stabile over a period of 14 days storage in closed bottles at 54 °C.

**8.** The use according to any one of claims 1 to 7,

wherein the pH of the urease inhibitor formulation (UI) is in the range of 8 to 10 and/or
wherein the pH change delta of the urease inhibitor formulation (UI) after two weeks storage at 54 °C is less than $\pm 0.8$, preferably less than $\pm 0.5$, and in particular less than $\pm 0.3$ and/or
wherein the urease inhibitor formulation (UI) has a viscosity at a shear rate of $100 s^{-1}$ determined according to CIPAC method 192 (rotational rheometer) of at most 100 mPas, preferably at most 80 mPas at 20 °C and at most 170 mPas, preferably at most 150 mPas at 10 °C.

**9.** A urease inhibitor formulation (UI) having a viscosity at a shear rate of $100 s^{-1}$ determined according to CIPAC method 192 (rotational rheometer) of at most 100 mPas, preferably at most 80 mPas, at 20 °C and at most 170 mPas, preferably at most 150 mPas, at 10 °C comprising

(A) 10 to 45 wt.-%, preferably 15 to 30 wt.-%, of a mixture (A) comprises N-(n-butyl)thiophosphoric acid triamide (NBPT) and N-(n-propyl)thiophosphoric acid triamide (NPPT),
(B) 0 to 50 wt.-%, preferably 8 to 22 wt.-%, of N,N-dimethyl lactamide,
(C) 20 to 85 wt.-%, preferably 40 to 70 wt.-%, of a solvent selected from the group consisting of glycol ether, glycerin ether, and mixtures thereof, and
(D) 3 to 25 wt.-%, preferably 4 to 15 wt.-%, of at least one amine selected from the group consisting of

(D2) an amine containing not more than one amino group and at least three alkoxy- or hydroxy-substituted $C_2$ to $C_{12}$ alkyl groups $R^{21}$, wherein at least one of the groups $R^{21}$ is different to the other groups $R^{21}$,
(D3) an amine containing not more than one amino group and at least two alkoxy- or hydroxy-substituted $C_2$ to $C_{12}$ alkyl groups $R^{22}$, wherein at least one of the groups $R^{22}$ bears the alkoxy or hydroxy substituent at a secondary or tertiary carbon atom and wherein at least one of the groups $R^{22}$ is different to the other group(s) $R^{22}$,
(D4) an amine containing at least one saturated or unsaturated $C_8$ to $C_{40}$ alkyl group $R^{23}$,

(D5) a saturated or unsaturated heterocyclic amine which contains at least one oxygen atom as ring atom and which does not contain a further alkoxy group, and

(D6) an amine selected from the group consisting of methyl-diethanolamine, methyl-diisopropanolamin, tetrahydroxy-propylethylenediamine, trimethylaminoethylethanolamine, N,N,N',N'-tetramethyl-1,6-hexanediamine, N, N' N"-tris(dimethylaminopropyl)hexahydrotriazine, and 2,2'-dimorpholinyldiethyl ether,

each based on the total amount of the urease inhibitor formulation (UI), wherein the inhibitor formulation (UI) is polymer free.

**10.** The urease inhibitor formulation (UI) according to claim 9,

wherein the solvent is selected from the group consisting of diethylene glycol, dipropylene glycol, triethylene glycol, di-ethyleneglycol monobutylether, triethyleneglycol-n-butylether, and mixtures thereof, in particular diethylene glycol and/or

wherein the solvent has a flashpoint (determined according to ISO 2719:2016) of more than 130 °C, preferably more than 135 °C, and in particular more than 140 °C.

**11.** A fertilizer composition (1) comprising a urea-containing fertilizer (F1) and mixture (M) comprising

(A) a mixture (A) comprising at least one (thio)phosphoric acid triamide;

(B) N,N-dimethyl lactamide; and

(C) a solvent selected from the group consisting of glycol ether, glycerin ether, and mixtures thereof, wherein the mixture (M) is polymer free.

**12.** The fertilizer composition (1) according to claim 11,

wherein the mixture (A) comprises at least one (thio)phosphoric acid triamide according to general formula (I)

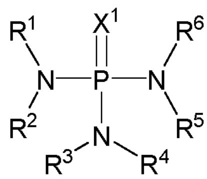

(I)

wherein

$X^1$ is O or S;

$R^1$ is $C_1$-$C_{20}$-alkyl, $C_3C_{20}$-cycloalkyl, $C_6$-$C_{20}$-aryl, $C_6$-$C_{20}$-aryl-$C_1$-$C_4$-alkyl, or $C_1$-$C_6$-(di)alkylaminocarbonyl;

$R^2$ is H, $C_1$-$C_{20}$-alkyl, $C_3C_{20}$-cycloalkyl, $C_6$-$C_{20}$-aryl, $C_6$-$C_{20}$-aryl-$C_1$-$C_4$-alkyl, or $C_1$-$C_6$-(di)alkylaminocarbonyl; or

$R^1$ and $R^2$ together with the nitrogen atom linking them define a 5- or 6-membered saturated or unsaturated heterocyclic radical, which optionally comprises 1 or 2 further heteroatoms selected from the group consisting of N, O, and S; and

$R^3$, $R^4$, $R^5$, and $R^6$ are independently of each other selected from the group consisting of H and $C_1$-$C_4$-alkyl; preferably

wherein the mixture (A) comprises N-(n-butyl)thiophosphoric acid triamide (NBPT) and/or N-(n-propyl)thiophosphoric acid triamide (NPPT), in particular wherein the mixture (A) comprises N-(n-butyl)thiophosphoric acid triamide (NBPT) and N-(n-propyl)thiophosphoric acid triamide (NPPT).

**13.** The fertilizer composition (1) according to claim 11 or 12,

wherein the solvent is selected from the group consisting of diethylene glycol, dipropylene glycol, triethylene glycol, di-ethyleneglycol monobutylether, triethyleneglycol-n-butylether, and mixtures thereof, in particular diethylene glycol and/or

wherein the solvent has a flashpoint (determined according to ISO 2719:2016) of more than 130 °C, preferably more than 135 °C, and in particular more than 140 °C.

**14.** The fertilizer composition (1) according to any one of claims 11 to 13,

wherein the mixture (M) further comprises
(D) at least one amine selected from the group consisting of
(D2) an amine containing not more than one amino group and at least three alkoxy- or hydroxy-substituted $C_2$ to $C_{12}$ alkyl groups $R^{21}$, wherein at least one of the groups $R^{21}$ is different to the other groups $R^{21}$,
(D3) an amine containing not more than one amino group and at least two alkoxy- or hydroxy-substituted $C_2$ to $C_{12}$ alkyl groups $R^{22}$, wherein at least one of the groups $R^{22}$ bears the alkoxy or hydroxy substituent at a secondary or tertiary carbon atom and wherein at least one of the groups $R^{22}$ is different to the other group(s) $R^{22}$,
(D4) an amine containing at least one saturated or unsaturated $C_8$ to $C_{40}$ alkyl group $R^{23}$,
(D5) a saturated or unsaturated heterocyclic amine which contains at least one oxygen atom as ring atom and which does not contain a further alkoxy group, and
(D6) an amine selected from the group consisting of methyl-diethanolamine, methyl-diisopropanolamin, tetrahydroxy-propylethylenediamine, trimethylaminoethylethanolamine, N,N,N',N'-tetramethyl-1,6-hexanediamine, N, N' N"-tris(dimethylaminopropyl)hexahydrotriazine, and 2,2'-dimorpholinyldiethyl ether,
preferably wherein the at least one amine is selected from the group consisting of (D2) an amine containing not more than one amino group and at least three hydroxy-substituted $C_2$ to $C_8$, preferably $C_2$ to $C_5$, more preferably $C_2$ to $C_3$ alkyl groups $R^{21}$, wherein at least one of the groups $R^{21}$ is different to the other groups $R^{21}$,
(D3) an amine containing not more than one amino group and at least two alkoxy- or hydroxy-substituted $C_2$ to $C_8$, preferably $C_2$ to $C_5$, more preferably $C_2$ to $C_3$ alkyl groups $R^{22}$, wherein at least one of the groups $R^{22}$ bears the alkoxy or hydroxy substituent at a secondary or tertiary carbon atom and wherein at least one of the groups $R^{22}$ is different to the other group(s) $R^{22}$,
(D6) an amine selected from the group consisting of methyl-diethanolamine, methyl-diisopropanolamin, and N, N',N"-tris(dimethylaminopropyl)hexahydrotriazine,
more preferably wherein the at least one amine is methyl-diethanolamine (MDEOA), methyl-diisopropanolamin (MDIPOA), methyl-ethanol-isopropanolamin (MEIPOA), N, N',N''-tris(dimethylaminopropyl)hexahydrotriazine (NNN), 1,1 '-((2-Hydroxyethyl)imino)dipropan-2-ol (EDIPOA) or bis(hydroxyethyl)-isopropanolamine (DEIPA), and in particular bis(hydroxyethyl)-isopropanolamine (DEIPA).

**15.** The fertilizer composition (1) according to any one of claims 11 to 14, wherein mixture (M) is coated onto the urea-containing fertilizer (F1).

**16.** The fertilizer composition (1) according to any one of claims 11 to 15, wherein the urea-containing fertilizer (F1) comprises at least one component selected from the group consisting of urea, urea ammonium nitrate (UAN), isobutylidene diurea (IBDU), crotonylidene diurea (CDU) and urea formaldehyde (UF), urea-acetaldehyde, and urea-glyoxal condensates, preferably wherein the urea-containing fertilizer (F1) is urea.

## Patentansprüche

**1.** Verwendung eines Lösungsmittels (C), das aus der Gruppe bestehend aus Glykolether, Glycerinether und Mischungen davon ausgewählt ist, zur Stabilisierung mindestens eines (Thio)phosphorsäuretriamid in einer Düngemittelzusammensetzung (1), umfassend ein harnstoffhaltiges Düngemittel (F1) und eine Ureaseinhibitorformulierung (UI), umfassend eine Mischung (A), die das mindestens eine (Thio)phosphorsäuretriamid und das Lösungsmittel (C) umfasst, wobei die Inhibitorformulierung (UI) polymerfrei ist und wobei die Ureaseinhibitorformulierung (UI) ferner (D) mindestens ein Amin umfasst, dass ausgewählt ist aus der Gruppe bestehend aus

(D2) einem Amin mit nicht mehr als einer Aminogruppe und mindestens drei alkoxy- oder hydroxysubstituierten $C_2$-bis $C_{12}$-Alkylgruppen $R^{21}$, wobei mindestens eine der Gruppen $R^{21}$ von den anderen Gruppen $R^{21}$ verschieden ist, (D3) einem Amin mit nicht mehr als einer Aminogruppe und mindestens zwei alkoxy- oder hydroxysubstituierten C2-bis C12-Alkylgruppen $R^{22}$, wobei mindestens eine der Gruppen $R^{22}$ den Alkoxy- bzw. Hydroxysubstituenten an einem sekundären oder tertiären Kohlenstoffatom trägt und wobei mindestens eine der Gruppen $R^{22}$ von der anderen Gruppe bzw. den anderen Gruppen $R^{22}$ verschieden ist,
(D4) einem Amin mit mindestens einer gesättigten oder ungesättigten $C_8$-bis $C_{40}$-Alkylgruppe $R^{23}$,
(D5) einem gesättigten oder ungesättigten heterocyclischen Amin, das mindestens ein Sauerstoffatom als Ringatom enthält und keine weitere Alkoxygruppe enthält, und
(D6) einem Amin, das aus der Gruppe bestehend aus Methyldiethanolamin, Methyldiisopropanolamin, Tetrahydroxy-propylethylendiamin, Trimethylaminoethylethanolamin, N,N,N',N'-Tetramethyl-1,6-hexandiamin, N,N',N"-Tris(dimethylaminopropyl)hexahydrotriazin und 2,2'-Dimorpholinyldiethylether ausgewählt ist.

**2.** Verwendung nach Anspruch 1,
wobei die Ureaseinhibitorformulierung (UI) ferner Folgendes umfasst:
(B) ein polares aprotisches Lösungsmittel, vorzugsweise ein Carbonsäureamid, weiter bevorzugt N,N-Dimethyllactamid, vorzugsweise wobei das polare aprotischen Lösungsmittel die Kältestabilität der Ureaseinhibitorformulierung (UI) verbessert.

**3.** Verwendung nach Anspruch 1 oder 2, wobei
wobei die Ureaseinhibitorformulierung (UI) auf das harnstoffhaltige Düngemittel (F1) aufgetragen ist.

**4.** Verwendung nach einem der Ansprüche 1 bis 3,

wobei das Lösungsmittel (C) aus der Gruppe bestehend aus Diethylenglykol, Dipropylenglykol, Triethylenglykol, Diethylenglykolmonobutylether, Triethylenglykol-n-butylether und Mischungen davon, insbesondere Diethylenglykol, ausgewählt ist und/oder
wobei das Lösungsmittel (C) einen Flammpunkt (bestimmt gemäß ISO 2719:2016) von mehr als 130 °C, vorzugsweise mehr als 135 °C und insbesondere mehr als 140 °C aufweist.

**5.** Verwendung nach einem der Ansprüche 1 bis 4,
wobei die Mischung (A) mindestens ein (Thio)phosphorsäuretriamid der allgemeinen Formel (I) umfasst:

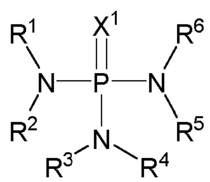
(I)

wobei

$X^1$ für O oder S steht;
$R^1$ für $C_1$-$C_{20}$-Alkyl, $C_3$-$C_{20}$-Cycloalkyl, $C_6$-$C_{20}$-Aryl, $C_6$-$C_{20}$-Aryl-$C_1$-$C_4$-alkyl oder $C_1$-$C_6$-(Di)alkylaminocarbonyl steht;
$R^2$ für H, $C_1$-$C_{20}$-Alkyl, $C_3$-$C_{20}$-Cycloalkyl, $C_6$-$C_{20}$-Aryl, $C_6$-$C_{20}$-Aryl-$C_1$-$C_4$-alkyl oder $C_1$-$C_6$-(Di)alkylaminocarbonyl steht; oder
$R^1$ und $R^2$ zusammen mit dem sie verbindenden Stickstoffatom einen 5- oder 6-gliedrigen gesättigten oder ungesättigten heterocyclischen Rest definieren, der gegebenenfalls 1 oder 2 weitere aus der aus N, O und S bestehenden Gruppe ausgewählte Heteroatome umfasst; und
$R^3$, $R^4$, $R^5$ und $R^6$ unabhängig voneinander aus der Gruppe bestehend aus H und $C_1$-$C_4$-Alkyl ausgewählt sind; vorzugsweise
wobei die Mischung (A) N-(n-Butyl)thiophosphorsäuretriamid (NBPT) und/oder N-(n-Propyl)thiophosphorsäuretriamid (NPPT) umfasst, insbesondere wobei die Mischung (A) N-(n-Butyl)thiophosphorsäuretriamid (NBPT) und N-(n-Propyl)thiophosphorsäuretriamid (NPPT) umfasst, und/oder wobei das mindestens eine (Thio)phosphorsäuretriamid in der Ureaseinhibitorformulierung (UI) in einer Menge von 5 bis weniger als 45 Gew.-%, vorzugsweise von 10 bis 42 Gew.-% und insbesondere von 15 bis 40 Gew.-%, bezogen auf die Gesamtmenge der Ureaseinhibitorformulierung (UI), enthalten ist.

**6.** Verwendung nach einem der Ansprüche 1 bis 5,

wobei das mindestens eine Amin ausgewählt ist aus der Gruppe bestehend aus
(D2) einem Amin mit nicht mehr als einer Aminogruppe und mindestens drei hydroxysubstituierten $C_2$- bis $C_8$-, vorzugsweise $C_2$- bis $C_5$- und weiter bevorzugt $C_2$- bis $C_3$-Alkylgruppen $R^{21}$, wobei mindestens eine der Gruppen $R^{21}$ von den anderen Gruppen $R^{21}$ verschieden ist,
(D3) einem Amin mit nicht mehr als einer Aminogruppe und mindestens zwei alkoxy- oder hydroxysubstituierten $C_2$-bis $C_8$-, vorzugsweise $C_2$- bis $C_5$- und weiter bevorzugt $C_2$-bis $C_3$-Alkylgruppen $R^{22}$, wobei mindestens eine der Gruppen $R^{22}$ den Alkoxy- bzw. Hydroxysubstituenten an einem sekundären oder tertiären Kohlenstoffatom

trägt und wobei mindestens eine der Gruppen $R^{22}$ von der anderen Gruppe bzw. den anderen Gruppen $R^{22}$ verschieden ist,

(D6) einem Amin, das aus der Gruppe bestehend aus Methyldiethanolamin, Methyldiisopropanolamin und N,N',N"-Tris(dimethylaminopropyl)hexahydrotriazin ausgewählt ist,

insbesondere wobei es sich bei dem mindestens einen Amin um Methyldiethanolamin (MDEOA), Methyldiisopropanolamin (MDIPOA), Methylethanolisopropanolamin (MEIPOA), N,N',N"-Tris(dimethylaminopropyl)hexahydrotriazin (NNN), 1,1'-((2-Hydroxyethyl)imino)dipropan-2-ol (EDIPOA) oder Bis(hydroxyethyl)isopropanolamin (DEIPA) handelt.

**7.** Verwendung nach einem der Ansprüche 1 bis 6,
wobei mindestens 85 Gew.-%, vorzugsweise mindestens 90 Gew.-%, weiter bevorzugt mindestens 95 Gew.-% und insbesondere mindestens 97 Gew.-% der mindestens einen in der Ureaseinhibitorformulierung (UI) enthaltenen (Thio)phosphorsäuretriamids über einen Zeitraum von 14 Tagen Lagerung in geschlossenen Flaschen bei 54 °C stabil sind.

**8.** Verwendung nach einem der Ansprüche 1 bis 7,

wobei der pH-Wert der Ureaseinhibitorformulierung (UI) im Bereich von 8 bis 10 liegt und/oder
wobei die pH-Wert-Änderung Delta der Ureaseinhibitorformulierung (UI) nach zwei Wochen Lagerung bei 54 °C weniger als $\pm$ 0,8, vorzugsweise weniger als $\pm$ 0,5 und insbesondere weniger als $\pm$ 0,3 beträgt und/oder
wobei die Ureaseinhibitorformulierung (UI) eine Viskosität bei einer Scherrate von 100 $s^{-1}$, bestimmt gemäß CIPAC-Methode 192 (Rotationsrheometer) von höchstens 100 mPas, vorzugsweise höchstens 80 mPas, bei 20 °C und höchstens 170 mPas, vorzugsweise höchstens 150 mPas, bei 10 °C aufweist.

**9.** Ureaseinhibitorformulierung (UI) mit einer Viskosität bei einer Scherrate von 100 $s^{-1}$, bestimmt gemäß CIPAC-Methode 192 (Rotationsrheometer) von höchstens 100 mPas, vorzugsweise höchstens 80 mPas, bei 20 °C und höchstens 170 mPas, vorzugsweise höchstens 150 mPas, bei 10 °C, umfassend

(A) 10 bis 45 Gew.-%, vorzugsweise 15 bis 30 Gew.-%, einer Mischung (A), die N-(n-Butyl)thiophosphorsäuretriamid (NBPT) und N-(n-Propyl)thiophosphorsäuretriamid (NPPT) umfasst,
(B) 0 bis 50 Gew.-%, vorzugsweise 8 bis 22 Gew.-%, N,N-Dimethyllactamid,
(C) 20 bis 85 Gew.-%, vorzugsweise 40 bis 70 Gew.-%, eines Lösungsmittels, das aus der Gruppe bestehend aus Glykolether, Glycerinether und Mischungen davon ausgewählt ist, und
(D) 3 bis 25 Gew.-%, vorzugsweise 4 bis 15 Gew.-%, mindestens eines Amins, das ausgewählt ist aus der Gruppe bestehend aus

(D2) einem Amin mit nicht mehr als einer Aminogruppe und mindestens drei alkoxy- oder hydroxysubstituierten $C_2$-bis $C_{12}$-Alkylgruppen $R^{21}$, wobei mindestens eine der Gruppen $R^{21}$ von den anderen Gruppen $R^{21}$ verschieden ist, (D3) einem Amin mit nicht mehr als einer Aminogruppe und mindestens zwei alkoxy- oder hydroxysubstituierten C2-bis C12-Alkylgruppen $R^{22}$, wobei mindestens eine der Gruppen $R^{22}$ den Alkoxy- bzw. Hydroxysubstituenten an einem sekundären oder tertiären Kohlenstoffatom trägt und wobei mindestens eine der Gruppen $R^{22}$ von der anderen Gruppe bzw. den anderen Gruppen $R^{22}$ verschieden ist,
(D4) einem Amin mit mindestens einer gesättigten oder ungesättigten $C_8$-bis $C_{40}$-Alkylgruppe $R^{23}$,
(D5) einem gesättigten oder ungesättigten heterocyclischen Amin, das mindestens ein Sauerstoffatom als Ringatom enthält und keine weitere Alkoxygruppe enthält, und
(D6) einem Amin, das aus der Gruppe bestehend aus Methyldiethanolamin, Methyldiisopropanolamin, Tetrahydroxy-propylethylendiamin, Trimethylaminoethylethanolamin, N,N,N',N'-Tetramethyl-1,6-hexandiamin, N,N',N"-Tris(dimethylaminopropyl)hexahydrotriazin und 2,2'-Dimorpholinyldiethylether ausgewählt ist.
jeweils bezogen auf die Gesamtmenge der Ureaseinhibitorformulierung (UI), wobei die Inhibitorformulierung (UI) polymerfrei ist.

**10.** Ureaseinhibitorformulierung (UI) nach Anspruch 9, wobei das Lösungsmittel aus der Gruppe bestehend aus Diethylenglykol, Dipropylenglykol, Triethylenglykol, Diethylenglykolmonobutylether, Triethylenglykol-n-butylether und Mischungen davon, insbesondere Diethylenglykol, ausgewählt ist und/oder wobei das Lösungsmittel einen Flammpunkt (bestimmt gemäß ISO 2719:2016) von mehr als 130 °C, vorzugsweise mehr als 135 °C und insbesondere mehr als 140 °C aufweist.

**11.** Düngemittelzusammensetzung (1), umfassend ein harnstoffhaltige Düngemittel (F1) und eine Mischung (M) umfassend

(A) eine Mischung (A), die mindestens ein (Thio)phosphorsäuretriamid umfasst;
(B) N,N-Dimethyllactamid und
(C) ein Lösungsmittel, das aus der Gruppe bestehend aus Glykolether, Glycerinether und Mischungen davon ausgewählt ist, wobei die Mischung (M) polymerfrei ist.

**12.** Düngemittelzusammensetzung (1) nach Anspruch 11, wobei die Mischung (A) mindestens ein (Thio)phosphorsäuretriamid der allgemeinen Formel (I) umfasst:

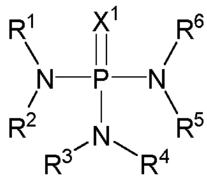
(I)

wobei

$X^1$ für O oder S steht;
$R^1$ für $C_1$-$C_{20}$-Alkyl, $C_3$-$C_{20}$-Cycloalkyl, $C_6$-$C_{20}$-Aryl, $C_6$-$C_{20}$-Aryl-$C_1$-$C_4$-alkyl oder $C_1$-$C_6$-(Di)alkylaminocarbonyl steht;
$R^2$ für H, $C_1$-$C_{20}$-Alkyl, $C_3$-$C_{20}$-Cycloalkyl, $C_6$-$C_{20}$-Aryl, $C_6$-$C_{20}$-Aryl-$C_1$-$C_4$-alkyl oder $C_1$-$C_6$-(Di)alkylaminocarbonyl steht; oder
$R^1$ und $R^2$ zusammen mit dem sie verbindenden Stickstoffatom einen 5- oder 6-gliedrigen gesättigten oder ungesättigten heterocyclischen Rest definieren, der gegebenenfalls 1 oder 2 weitere aus der aus N, O und S bestehenden Gruppe ausgewählte Heteroatome umfasst; und
$R^3$, $R^4$, $R^5$ und $R^6$ unabhängig voneinander aus der Gruppe bestehend aus H und $C_1$-$C_4$-Alkyl ausgewählt sind; vorzugsweise
wobei die Mischung (A) N-(n-Butyl)thiophosphorsäuretriamid (NBPT) und/oder N-(n-Propyl)thiophosphorsäuretriamid (NPPT) umfasst, insbesondere wobei die Mischung (A) N-(n-Butyl)thiophosphorsäuretriamid (NBPT) und N-(n-Propyl)thiophosphorsäuretriamid (NPPT) umfasst.

**13.** Düngemittelzusammensetzung (1) nach Anspruch 11 oder 12,
wobei das Lösungsmittel aus der Gruppe bestehend aus Diethylenglykol, Dipropylenglykol, Triethylenglykol, Diethylenglykolmonobutylether, Triethylenglykol-n-butylether und Mischungen davon, insbesondere Diethylenglykol, ausgewählt ist und/oder wobei das Lösungsmittel einen Flammpunkt (bestimmt gemäß ISO 2719:2016) von mehr als 130 °C, vorzugsweise mehr als 135 °C und insbesondere mehr als 140 °C aufweist.

**14.** Düngemittelzusammensetzung (1) nach einem der Ansprüche 11 bis 13,

wobei die Mischung (M) ferner Folgendes umfasst:
(D) mindestens ein Amin, ausgewählt aus der Gruppe bestehend aus
(D2) einem Amin mit nicht mehr als einer Aminogruppe und mindestens drei alkoxy- oder hydroxysubstituierten $C_2$-bis $C_{12}$-Alkylgruppen $R^{21}$, wobei mindestens eine der Gruppen $R^{21}$ von den anderen Gruppen $R^{21}$ verschieden ist,
(D3) einem Amin mit nicht mehr als einer Aminogruppe und mindestens zwei alkoxy- oder hydroxysubstituierten C2-bis C12-Alkylgruppen $R^{22}$, wobei mindestens eine der Gruppen $R^{22}$ den Alkoxy- bzw. Hydroxysubstituenten an einem sekundären oder tertiären Kohlenstoffatom trägt und wobei mindestens eine der Gruppen $R^{22}$ von der anderen Gruppe bzw. den anderen Gruppen $R^{22}$ verschieden ist,
(D4) einem Amin mit mindestens einer gesättigten oder ungesättigten $C_8$-bis $C_{40}$-Alkylgruppe $R^{23}$,
(D5) einem gesättigten oder ungesättigten heterocyclischen Amin, das mindestens ein Sauerstoffatom als Ringatom enthält und keine weitere Alkoxygruppe enthält, und
(D6) einem Amin, das aus der Gruppe bestehend aus Methyldiethanolamin, Methyldiisopropanolamin, Tetrahydroxy-propylethylendiamin, Trimethylaminoethylethanolamin, N,N,N',N'-Tetramethyl-1,6-hexandiamin, N,N',N''-Tris(dimethylaminopropyl)hexahydrotriazin und 2,2'-Dimorpholinyldiethylether ausgewählt ist.
vorzugsweise wobei das mindestens eine Amin ausgewählt ist aus der Gruppe bestehend aus

(D2) einem Amin mit nicht mehr als einer Aminogruppe und mindestens drei hydroxysubstituierten $C_2$- bis $C_8$-, vorzugsweise $C_2$- bis $C_5$- und weiter bevorzugt $C_2$- bis $C_3$-Alkylgruppen $R^{21}$, wobei mindestens eine der Gruppen $R^{21}$ von den anderen Gruppen $R^{21}$ verschieden ist,
(D3) einem Amin mit nicht mehr als einer Aminogruppe und mindestens zwei alkoxy- oder hydroxysubstituierten C2-bis C8-, vorzugsweise C2- bis C5- und weiter bevorzugt C2- bis C3-Alkylgruppen $R^{22}$, wobei mindestens eine der Gruppen $R^{22}$ den Alkoxy- bzw. Hydroxysubstituenten an einem sekundären oder tertiären Kohlenstoffatom trägt und wobei mindestens eine der Gruppen $R^{22}$ von der anderen Gruppe bzw. den anderen Gruppen $R^{22}$ verschieden ist,
(D6) einem Amin, das aus der Gruppe bestehend aus Methyldiethanolamin, Methyldiisopropanolamin und N,N',N"-Tris(dimethylaminopropyl)hexahydrotriazin ausgewählt ist,
weiter bevorzugt wobei es sich bei dem mindestens einen Amin um Methyldiethanolamin (MDEOA), Methyldiisopropanolamin (MDIPOA), Methylethanolisopropanolamin (MEIPOA), N,N',N"-Tris(dimethylaminopropyl)hexahydrotriazin (NNN), 1,1'-((2-Hydroxyethyl)imino)dipropan-2-ol (EDIPOA) oder Bis(hydroxyethyl)isopropanolamin (DEIPA) und insbesondere Bis(hydroxyethyl)isopropanolamin (DEIPA) handelt.

**15.** Düngemittelzusammensetzung (1) nach einem der Ansprüche 11 bis 14,
wobei die Mischung (M) auf das harnstoffhaltige Düngemittel (F1) aufgetragen ist.

**16.** Düngemittelzusammensetzung (1) nach einem der Ansprüche 11 bis 15,
wobei das harnstoffhaltige Düngemittel (F1) mindestens eine Komponente umfasst, die aus der Gruppe bestehend aus Harnstoff, Harnstoff-Ammoniumnitrat (UAN), Isobutylidendiharnstoff (IBDU), Crotonylidendiharnstoff (CDU) und Harnstoff-Formaldehyd(UF)-, Harnstoff-Acetaldehyd- und Harnstoff-Glyoxal-Kondensaten ausgewählt ist, vorzugsweise wobei es sich bei dem harnstoffhaltigen Düngemittel (F1) um Harnstoff handelt.

**Revendications**

**1.** Utilisation d'un solvant (C) choisi dans le groupe constitué par un éther de glycol, un éther de glycérine et leurs mélanges pour stabiliser au moins un triamide d'acide (thio)phosphorique dans une composition d'engrais (1) comprenant un engrais contenant de l'urée (F1) et une formulation d'inhibiteur d'uréase (UI) comprenant un mélange (A) comprenant l'au moins un triamide d'acide (thio)phosphorique et le solvant (C), dans laquelle la formulation d'inhibiteur (UI) est exempte de polymère, et dans laquelle la formulation d'inhibiteur d'uréase (UI) comprend en outre (D) au moins une amine choisie dans le groupe constitué par

(D2) une amine ne contenant pas plus d'un groupe amino et au moins trois groupes $C_2$ à $C_{12}$ alkyle $R^{21}$ substitués par alcoxy ou hydroxy, au moins l'un des groupes $R^{21}$ étant différent des autres groupes $R^{21}$,
(D3) une amine ne contenant pas plus d'un groupe amino et au moins deux groupes $C_2$ à $C_{12}$ alkyle $R^{22}$ substitués par alcoxy ou hydroxy, au moins l'un des groupes $R^{22}$ portant le substituant alcoxy ou hydroxy au niveau d'un atome de carbone secondaire ou tertiaire et au moins l'un des groupes $R^{22}$ étant différent du ou des autres groupes $R^{22}$,
(D4) une amine contenant au moins un groupe $C_8$ à $C_{40}$ alkyle $R^{23}$ saturé ou insaturé,
(D5) une amine hétérocyclique saturée ou insaturée qui contient au moins un atome d'oxygène en tant qu'atome de cycle et qui ne contient pas un autre groupe alcoxy, et (D6) une amine choisie dans le groupe constitué par la méthyl-diéthanolamine, la méthyl-diisopropanolamine, la tétrahydroxy-propyléthylènediamine, la triméthylaminoéthyléthanolamine, la N,N,N',N'-tétraméthyl-1,6-hexanediamine, la N,N',N"-tris(diméthylaminopropyl)hexahydrotriazine et l'éther 2,2'-dimorpholinyldiéthylique.

**2.** Utilisation selon la revendication 1,

dans laquelle la formulation d'inhibiteur d'uréase (UI) comprend en outre
(B) un solvant aprotique polaire, préférablement un amide d'acide carboxylique, plus préférablement le N,N-diméthyllactamide, préférablement dans laquelle le solvant aprotique polaire améliore la stabilité à froid de la formulation d'inhibiteur d'uréase (UI).

**3.** Utilisation selon la revendication 1 ou 2,
dans laquelle la formulation d'inhibiteur d'uréase (UI) est revêtue sur l'engrais contenant de l'urée (F1).

**4.** Utilisation selon l'une quelconque des revendications 1 à 3,

dans laquelle le solvant (C) est choisi dans le groupe constitué par le diéthylène glycol, le dipropylène glycol, le triéthylène glycol, le diéthylène glycol monobutyléther, le triéthylène glycol-n-butyléther et leurs mélanges, en particulier le diéthylène glycol et/ou dans laquelle le solvant (C) présente un point éclair (déterminé selon la norme ISO 2719:2016) supérieur à 130 °C, préférablement supérieur à 135 °C, et en particulier supérieur à 140 °C.

**5.** Utilisation selon l'une quelconque des revendications 1 à 4, dans laquelle le mélange (A) comprend au moins un triamide d'acide (thio)phosphorique selon la formule générale (I)

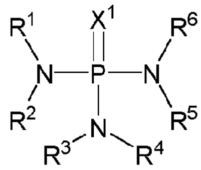
(I)

dans laquelle

$X^1$ est O ou S ;
$R^1$ est $C_1$-$C_{20}$-alkyle, $C_3$-$C_{20}$-cycloalkyle, $C_6$-$C_{20}$-aryle, $C_6$-$C_{20}$-aryl-$C_1$-$C_4$-alkyle ou $C_1$-$C_6$-(di)alkylaminocarbonyle ;
$R^2$ est H, $C_1$-$C_{20}$-alkyle, $C_3$-$C_{20}$-cycloalkyle, $C_6$-$C_{20}$-aryle, $C_6$-$C_{20}$-aryl-$C_1$-$C_4$-alkyle ou $C_1$-$C_6$-(di)alkylaminocarbonyle ; ou
$R^1$ et $R^2$ conjointement avec l'atome d'azote les liant définissent un radical hétérocyclique saturé ou insaturé à 5 ou 6 chaînons, qui comprend éventuellement 1 ou 2 hétéroatomes supplémentaires choisis dans le groupe constitué par N, O et S ; et
$R^3$, $R^4$, $R^5$, et $R^6$ sont indépendamment les uns des autres choisis dans le groupe constitué par H et $C_1$-$C_4$-alkyle ;
préférablement
dans laquelle le mélange (A) comprend du triamide d'acide N-(n-butyl)thiophosphorique (NBPT) et/ou du triamide d'acide N-(n-propyl)thiophosphorique (NPPT), en particulier dans laquelle le mélange (A) comprend du triamide d'acide N-(n-butyl)thiophosphorique (NBPT) et du triamide d'acide N-(n-propyl)thiophosphorique (NPPT) et/ou
dans laquelle le triamide d'acide (thio)phosphorique est compris dans la formulation d'inhibiteur d'uréase (UI) en une quantité de 5 à moins de 45 % en poids, préférablement de 10 à 42 % en poids, et en particulier de 15 à 40 % en poids, par rapport à la quantité totale de la formulation d'inhibiteur d'uréase (UI).

**6.** Utilisation selon l'une quelconque des revendications 1 à 5,

dans laquelle l'au moins une amine est choisie dans le groupe constitué par
(D2) une amine ne contenant pas plus d'un groupe amino et au moins trois groupes $C_2$ à $C_8$, préférablement $C_2$ à $C_5$, plus préférablement $C_2$ à $C_3$ alkyle $R_{21}$ substitués par hydroxy, au moins l'un des groupes $R_{21}$ étant différent des autres groupes $R_{21}$,
(D3) une amine ne contenant pas plus d'un groupe amino et au moins deux groupes $C_2$ à $C_8$ préférablement $C_2$ à $C_5$, plus préférablement $C_2$ à $C_3$ alkyle $R_{22}$ substitués par alcoxy ou hydroxy, au moins l'un des groupes $R_{22}$ portant le substituant alcoxy ou hydroxy au niveau d'un atome de carbone secondaire ou tertiaire et au moins l'un des groupes $R^{22}$ étant différent du ou des autres groupes $R^{22}$, (D6) une amine choisie dans le groupe constitué par la méthyl-diéthanolamine, la méthyl-diisopropanolamine et la N,N',N"-tris(diméthylaminopropyl)hexahydrotriazine,
en particulier, dans laquelle l'au moins une amine est la méthyl-diéthanolamine (MDEOA), la méthyl-diisopropanolamine (MDIPOA), la méthyl-éthanol-isopropanolamine (MEIPOA), la N,N',N"-tris(diméthylaminopropyl) hexahydrotriazine (NNN), la 1,1'-((2-hydroxyéthyl)imino)dipropan-2-ol (EDIPOA) ou la bis(hydroxyéthyl)-isopropanolamine (DEIPA).

**7.** Utilisation selon l'une quelconque des revendications 1 à 6, dans laquelle au moins 85 % en poids, préférablement au moins 90 % en poids, plus préférablement au moins 95 % en poids, et en particulier au moins 97 % en poids, de l'au moins un triamide d'acide (thio)phosphorique compris dans la formulation d'inhibiteur d'uréase (UI) sont stables pendant une période de stockage de 14 jours dans des bouteilles fermées à 54 °C.

**8.** Utilisation selon l'une quelconque des revendications 1 à 7,

dans laquelle le pH de la formulation d'inhibiteur d'uréase (UI) est dans la plage de 8 à 10 et/ou
dans laquelle le delta de changement de pH de la formulation d'inhibiteur d'uréase (UI) après deux semaines de stockage à 54 °C est inférieur à ±0,8, préférablement inférieur à ±0,5, et en particulier inférieur à ±0,3 et/ou
dans laquelle la formulation d'inhibiteur d'uréase (UI) a une viscosité à une vitesse de cisaillement de 100 $s^{-1}$ déterminée selon le procédé CIPAC 192 (rhéomètre rotatif) d'au plus 100 mPas, préférablement d'au plus 80 mPas à 20 °C et d'au plus 170 mPas, préférablement d'au plus 150 mPas à 10 °C.

**9.** Formulation d'inhibiteur d'uréase (UI) ayant une viscosité à une vitesse de cisaillement de 100 $s^{-1}$ déterminée selon le procédé CIPAC 192 (rhéomètre rotatif) d'au plus 100 mPas, préférablement d'au plus 80 mPas, à 20 °C et d'au plus 170 mPas, préférablement d'au plus 150 mPas, à 10 °C comprenant

(A) 10 à 45 % en poids, préférablement 15 à 30 % en poids, d'un mélange (A) comprenant du triamide d'acide N-(n-butyl)thiophosphorique (NBPT) et du triamide d'acide N-(n-propyl)thiophosphorique (NPPT),
(B) 0 à 50 % en poids, préférablement 8 à 22 % en poids, de N,N-diméthyllactamide,
(C) 20 à 85 % en poids, préférablement 40 à 70 % en poids, d'un solvant choisi dans le groupe constitué par un éther de glycol, un éther de glycérine et leurs mélanges, et
(D) 3 à 25 % en poids, préférablement 4 à 15 % en poids, d'au moins une amine choisie dans le groupe constitué par

(D2) une amine ne contenant pas plus d'un groupe amino et au moins trois groupes $C_2$ à $C_{12}$ alkyle $R^{21}$ substitués par alcoxy ou hydroxy, au moins l'un des groupes $R^{21}$ étant différent des autres groupes $R^{21}$,
(D3) une amine ne contenant pas plus d'un groupe amino et au moins deux groupes $C_2$ à $C_{12}$ alkyle $R^{22}$ substitués par alcoxy ou hydroxy, au moins l'un des groupes $R^{22}$ portant le substituant alcoxy ou hydroxy au niveau d'un atome de carbone secondaire ou tertiaire et au moins l'un des groupes $R^{22}$ étant différent du ou des autres groupes $R^{22}$,
(D4) une amine contenant au moins un groupe $C_8$ à $C_{40}$ alkyle $R^{23}$ saturé ou insaturé,
(D5) une amine hétérocyclique saturée ou insaturée qui contient au moins un atome d'oxygène en tant qu'atome de cycle et qui ne contient pas un autre groupe alcoxy, et (D6) une amine choisie dans le groupe constitué par la méthyl-diéthanolamine, la méthyl-diisopropanolamine, la tétrahydroxy-propyléthylènediamine, la triméthylaminoéthyléthanolamine, la **N,N,N',N'-**tétraméthyl-1,6-hexanediamine, la N,N'N"-tris(diméthylaminopropyl)hexahydrotriazine et l'éther 2,2'-dimorpholinyldiéthylique,
chacune basée sur la quantité totale de la formulation d'inhibiteur d'uréase (UI), la formulation d'inhibiteur (UI) étant exempte de polymère.

**10.** Formulation d'inhibiteur d'uréase (UI) selon la revendication 9,
dans laquelle le solvant est choisi dans le groupe constitué par le diéthylène glycol, le dipropylène glycol, le triéthylène glycol, le diéthylène glycol monobutyléther, le triéthylène glycol-n-butyléther et leurs mélanges, en particulier le diéthylène glycol et/ou dans laquelle le solvant présente un point éclair (déterminé selon la norme ISO 2719:2016) supérieur à 130 °C, préférablement supérieur à 135 °C, et en particulier supérieur à 140 °C.

**11.** Composition d'engrais (1) comprenant un engrais contenant de l'urée (F1) et un mélange (M) comprenant

(A) un mélange (A) comprenant au moins un triamide d'acide (thio)phosphorique ;
(B) du N,N-diméthyllactamide ; et
(C) un solvant choisi dans le groupe constitué par un éther de glycol, un éther de glycérine et leurs mélanges, dans laquelle le mélange (M) est exempt de polymère.

**12.** Composition d'engrais (1) selon la revendication 11,
dans laquelle le mélange (A) comprend au moins un triamide d'acide (thio)phosphorique selon la formule générale (I)

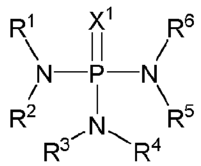
(I)

dans laquelle

$X^1$ est O ou S ;
$R^1$ est $C_1$-$C_{20}$-alkyle, $C_3$-$C_{20}$-cycloalkyle, $C_6$-$C_{20}$-aryle, $C_6$-$C_{20}$-aryl-$C_1$-$C_4$-alkyle ou $C_1$-$C_6$-(di)alkylaminocarbonyle ;
$R^2$ est H, $C_1$-$C_{20}$-alkyle, $C_3$-$C_{20}$-cycloalkyle, $C_6$-$C_{20}$-aryle, $C_6$-$C_{20}$-aryl-$C_1$-$C_4$-alkyle ou $C_1$-$C_6$-(di)alkylaminocarbonyle ; ou
$R^1$ et $R^2$ conjointement avec l'atome d'azote les liant définissent un radical hétérocyclique saturé ou insaturé à 5 ou 6 chaînons, qui comprend éventuellement 1 ou 2 hétéroatomes supplémentaires choisis dans le groupe constitué par N, O et S ; et
$R^3$, $R^4$, $R^5$, et $R^6$ sont indépendamment les uns des autres choisis dans le groupe constitué par H et $C_1$-$C_4$-alkyle ; préférablement
dans laquelle le mélange (A) comprend du triamide d'acide N-(n-butyl)thiophosphorique (NBPT) et/ou du triamide d'acide N-(n-propyl)thiophosphorique (NPPT), en particulier dans lequel le mélange (A) comprend du triamide d'acide N-(n-butyl)thiophosphorique (NBPT) et du triamide d'acide N-(n-propyl)thiophosphorique (NPPT).

**13.** Composition d'engrais (1) selon la revendication **11** ou 12,
dans laquelle le solvant est choisi dans le groupe constitué par le diéthylène glycol, le dipropylène glycol, le triéthylène glycol, le diéthylène glycol monobutyléther, le triéthylène glycol-n-butyléther et leurs mélanges, en particulier le diéthylène glycol et/ou dans laquelle le solvant présente un point éclair (déterminé selon la norme ISO 2719:2016) supérieur à 130 °C, préférablement supérieur à 135 °C, et en particulier supérieur à 140 °C.

**14.** Composition d'engrais (1) selon l'une quelconque des revendications **11** à 13,

dans laquelle le mélange (M) comprend en outre
(D) au moins une amine choisie dans le groupe constitué par
(D2) une amine ne contenant pas plus d'un groupe amino et au moins trois groupes $C_2$ à $C_{12}$ alkyle $R^{21}$ substitués par alcoxy ou hydroxy, au moins l'un des groupes $R^{21}$ étant différent des autres groupes $R^{21}$,
(D3) une amine ne contenant pas plus d'un groupe amino et au moins deux groupes $C_2$ à $C_{12}$ alkyle $R^{22}$ substitués par alcoxy ou hydroxy, au moins l'un des groupes $R^{22}$ portant le substituant alcoxy ou hydroxy au niveau d'un atome de carbone secondaire ou tertiaire et au moins l'un des groupes $R^{22}$ étant différent du ou des autres groupes $R^{22}$,
(D4) une amine contenant au moins un groupe $C_8$ à $C_{40}$ alkyle $R^{23}$ saturé ou insaturé,
(D5) une amine hétérocyclique saturée ou insaturée qui contient au moins un atome d'oxygène en tant qu'atome de cycle et qui ne contient pas un autre groupe alcoxy, et (D6) une amine choisie dans le groupe constitué par la méthyl-diéthanolamine, la méthyl-diisopropanolamine, la tétrahydroxy-propyléthylènediamine, la triméthylaminoéthyléthanolamine, la N,N,N',N'-tétraméthyl-1,6-hexanediamine, la N,N'N"-tris(diméthylaminopropyl)hexahydrotriazine et l'éther 2,2'-dimorpholinyldiéthylique,
préférablement, dans laquelle l'au moins une amine est choisie dans le groupe constitué par
(D2) une amine ne contenant pas plus d'un groupe amino et au moins trois groupes $C_2$ à $C_8$, préférablement $C_2$ à $C_5$, plus préférablement $C_2$ à $C_3$ alkyle $R_{21}$ substitués par hydroxy, au moins l'un des groupes $R_{21}$ étant différent des autres groupes $R_{21}$,
(D3) une amine ne contenant pas plus d'un groupe amino et au moins deux groupes $C_2$ à $C_8$ préférablement $C_2$ à $C_5$, plus préférablement $C_2$ à $C_3$ alkyle $R_{22}$ substitués par alcoxy ou hydroxy, au moins l'un des groupes $R_{22}$ portant le substituant alcoxy ou hydroxy au niveau d'un atome de carbone secondaire ou tertiaire et au moins l'un des groupes $R^{22}$ étant différent du ou des autres groupes $R^{22}$, (D6) une amine choisie dans le groupe constitué par la méthyl-diéthanolamine, la méthyl-diisopropanolamine et la N,N',N"-tris(diméthylaminopropyl)hexahydrotriazine, plus préférablement dans laquelle l'au moins une amine est la méthyl-diéthanolamine (MDEOA), la méthyl-diisopropanolamine (MDIPOA), la méthyl-éthanol-isopropanolamine (MEIPOA), la N,N',N"-tris(diméthylaminopropyl)hexahydrotriazine (NNN), la 1,1'-((2-hydroxyéthyl)imino)dipropan-2-ol (EDIPOA) ou la bis(hydroxyéthyl)-isopropanolamine (DEIPA), et en particulier la bis(hydroxyéthyl)-isopropanolamine (DEIPA).

**15.** Composition d'engrais (1) selon l'une quelconque des revendications **11** à 14,
dans laquelle le mélange (M) est revêtu sur l'engrais contenant de l'urée (F1).

**16.** Composition d'engrais (1) selon l'une quelconque des revendications **11** à 15,
dans laquelle l'engrais contenant de l'urée (F1) comprend au moins un composant choisi dans le groupe constitué par

l'urée, le nitrate d'urée ammonium (UAN), l'isobutylidène diurée (IBDU), la crotonylidène diurée (CDU) et l'urée formaldéhyde (UF), l'urée-acétaldéhyde et les condensats urée-glyoxa, préférablement l'engrais contenant de l'urée (F1) est l'urée.

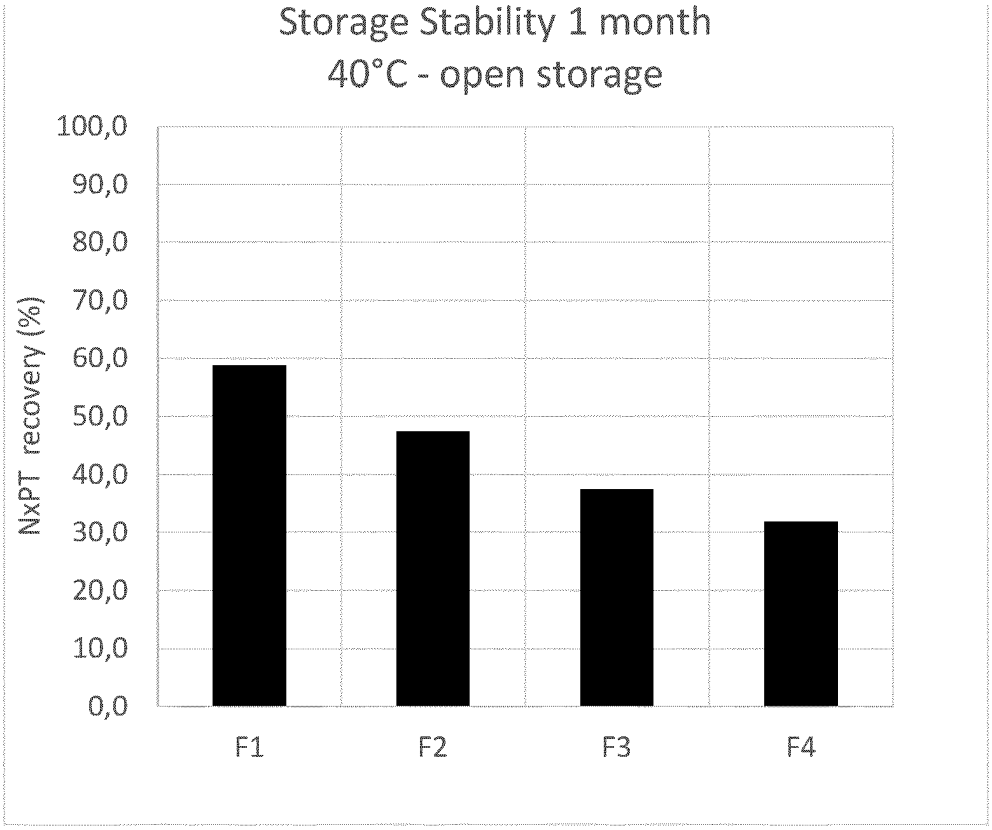
Storage Stability 1 month
40°C - open storage
NxPT recovery (%)
100,0
90,0
80,0
70,0
60,0
50,0
40,0
30,0
20,0
10,0
0,0
F1
F2
F3
F4

Fig. 1

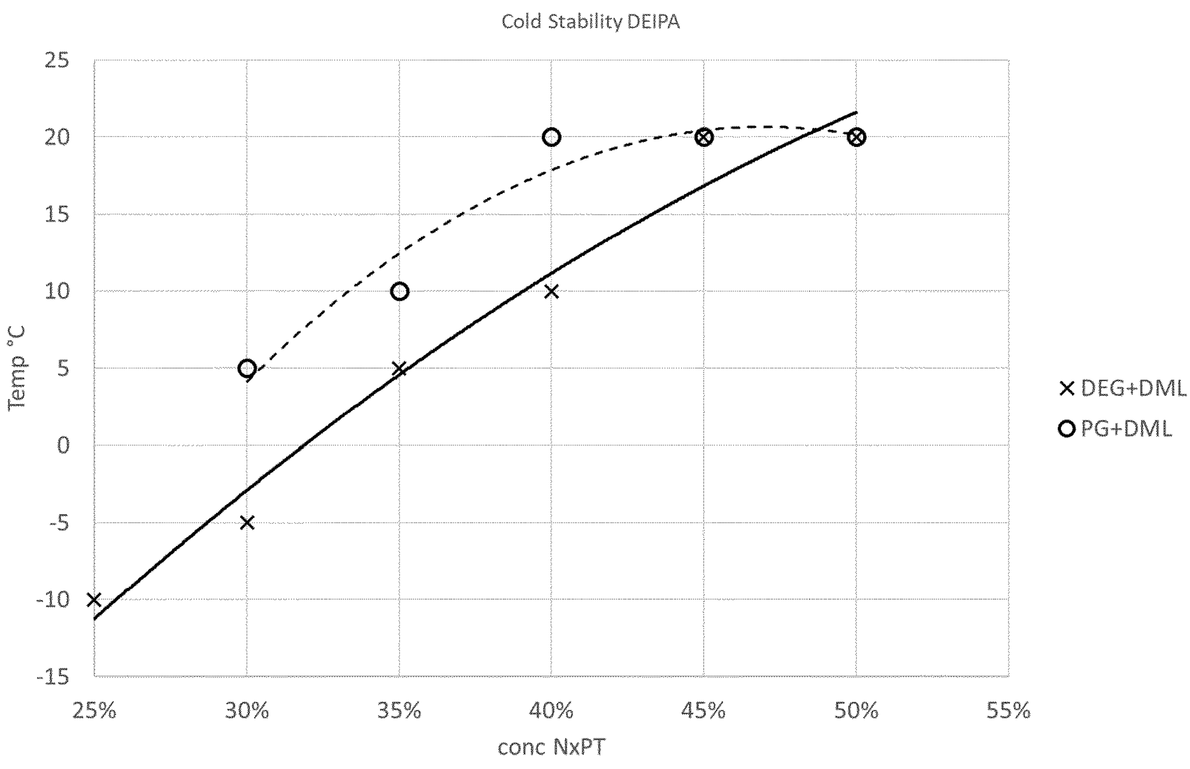
Cold Stability DEIPA
Temp °C
25
20
15
10
5
0
-5
-10
-15
25%
30%
35%
40%
45%
50%
55%
conc NxPT
DEG+DML
PG+DML

Fig. 2a

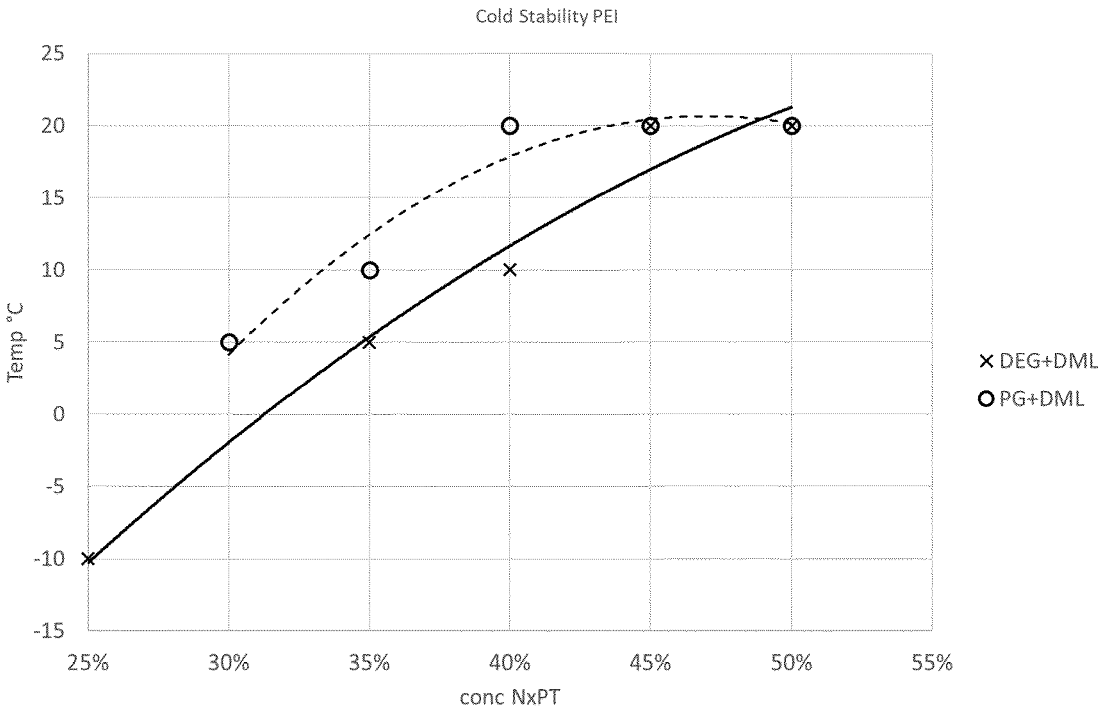
Cold Stability PEI
Temp °C
25
20
15
10
5
0
-5
-10
-15
25%
30%
35%
40%
45%
50%
55%
conc NxPT
DEG+DML
PG+DML

Fig. 2b

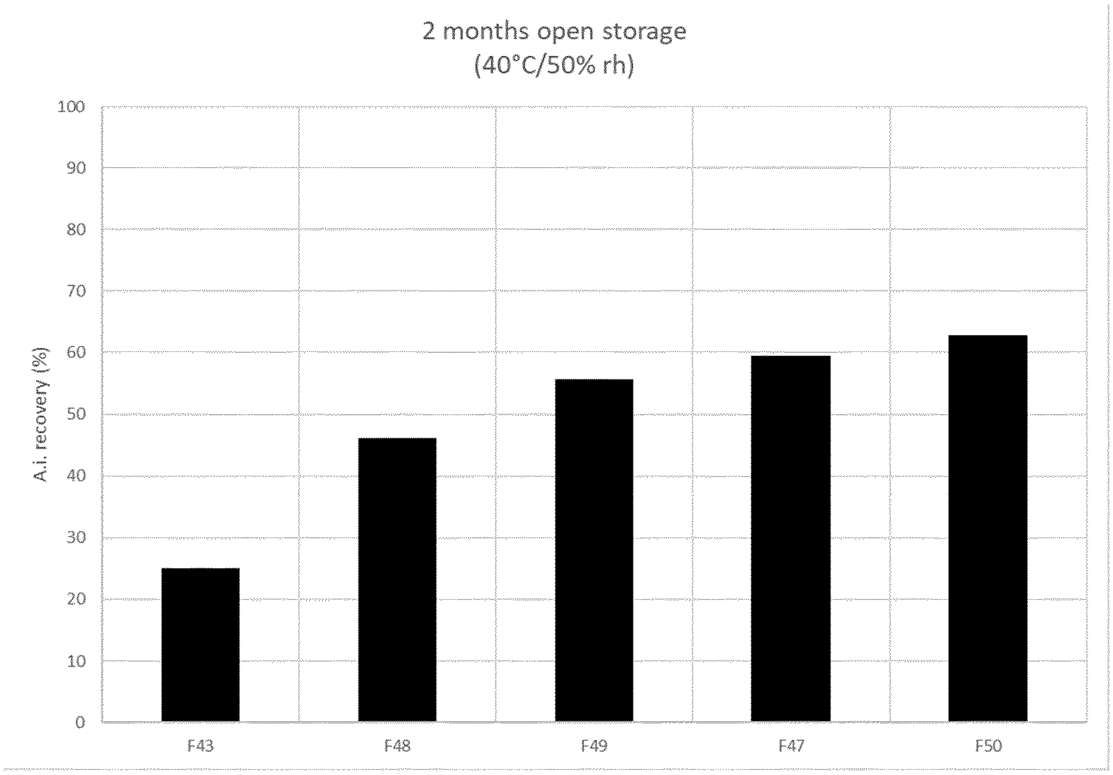
2 months open storage
(40°C/50% rh)
A.i. recovery (%)
100
90
80
70
60
50
40
30
20
10
0
F43
F48
F49
F47
F50

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0119487 A
- US 5352265 A
- WO 2015001457 A
- EP 3763691 A1
- EP 3210959 A1


### Non-patent literature cited in the description


- **KISS, S.** ; **SIMIHÄIAN, M**. Improving Efficiency of Urea Fertilizers by Inhibition of Soil Urease Activity. Kluwer Academic Publishers, 2002
- **SOARES et al.** *17th International Nitrogen Workshop*, 2012
- **CANTARELLA H** ; **SOARES JR** ; **SOUSARM** ; **OTTO R**. SequeiraCH. Stability of urease inhibitor added to urea. Melbourne, Australia. *2016 International nitrogen initiative conference: solutions to improve nitrogen use efficiency for the world*, 2016
- **WATSON CJ** ; **AKHONZADA NA** ; **HAMILTON JTG** ; **MATTHEWS DI.** Rate and mode of application of the urease inhibitor N-(n-butyl) thiophosphoric triamide on ammonia volatilization from surface-applied urea.. *Soil Use Management*, 2008, vol. 24, 246-53
- **RÖMPPS**. Chemie Lexikon. 1992, 3532-3533
- **ULLMANNS**. Enzyklopädie der Technischen Chemie. 1974, vol. 8, 212-213